# EUROPEAN PATENT SPECIFICATION

(11) **EP 4 191 409 B1**
(45) Date of publication and mention of the grant of the patent: **22.10.2025**
(21) Application number: 21860201.9
(22) Date of filing: 16.08.2021
(51) Int. Cl.: G06F 8/36, G06F 16/176, G06F 3/06, G06F 8/61

(54) **SHARED LIBRARY MULTIPLEXING METHOD AND ELECTRONIC DEVICE**
MULTIPLEXVERFAHREN FÜR GEMEINSAME BIBLIOTHEK UND ELEKTRONISCHE VORRICHTUNG
PROCÉDÉ DE MULTIPLEXAGE DE BIBLIOTHÈQUE PARTAGÉE ET DISPOSITIF ÉLECTRONIQUE

(30) Priority: 31.08.2020 CN 202010899468
(43) Date of publication of application: 07.06.2023
(73) Proprietor: Huawei Technologies Co., Ltd., Shenzhen, Guangdong 518129 (CN)
(72) Inventor: XIAO, Jiwei, Shenzhen, Guangdong 518129 (CN)
(74) Representative: Goddar, Heinz J.
(86) International application number: PCT/CN2021/112853
(87) International publication number: WO 2022/042363

(56) References cited:
- CN-A- 102 854 853
- CN-A- 106 203 006
- CN-A- 106 897 089
- CN-A- 107 102 888
- US-A1- 2012 221 817
- US-A1- 2012 330 904
- US-A1- 2013 103 744
- US-B1- 6 389 433
- ANONYMOUS: "inode - Wikipedia", 4 April 2019 (2019-04-04), pages 1 - 5, XP055901428, Retrieved from the Internet <URL:https://en.wikipedia.org/w/index.php?title=Inode&oldid=890873894> [retrieved on 20220315]

## Description

### TECHNICAL FIELD

Embodiments of this application relate to the field of electronic device technologies, and in particular, to a method for reusing a shared library and an electronic device.

### BACKGROUND

With development of science and technologies, a user has an increasing requirement on a function of an electronic product such as a mobile phone or an intelligent wearable device. In order to meet a requirement of the user for using the electronic product, applications (Applications, APPs) in the electronic product are gradually increasing. Currently, each APP includes an executable program and a plurality of shared libraries. The shared libraries include a dynamic link library in a Windows operating system, a shared target in a Linux operating system, and the like. To be specific, after the user installs an APP in the electronic product, an executable program and a plurality of shared libraries of the APP are stored in the electronic product.

However, with development of open-source code and platform technologies, different APPs may use a same shared library during development. Therefore, when a quantity of APPs in the electronic product increases, the electronic product may store a plurality of same shared libraries, causing waste of storage space of the electronic product.

US 2012/330904 A1 discloses an inode implemented file system utilized to support both offline and inline deduplication of data blocks in a data storage. When the first content is stored in the storage medium, one inode is used to associate a filename with the data blocks where the first content is stored. When a second content that is a duplicate of the first content is to be stored, then a parent inode is created to point to the data blocks in which a copy of the first content is stored. Further, two inodes are created, one representing the first content and the other representing the second content. Both inodes point to the same parent inode that points to the data blocks where the first content is stored.

US 6,389,433 B1 discloses a system that operates as a background process automatically identify and merge duplicate files into a single instance file, wherein the duplicate files become independent links to the single instance files. Specifically, when two files have duplicate data, the duplicate data of the files are automatically merged into a single instance representation of that data. Each of the files is converted into logically separate links to the single instance representation, each link comprising a logically separate link file that provides logically separate file system access to the single instance representation of the file data.

US 2012/221817 Al discloses the usage of inodes between virtual machines to point to data loaded in another virtual machine.

Anonymous, "inode - Wikipedia", (20190404) is a copy of a version of a Wikipedia article for "inode" dated April 4, 2019.

### SUMMARY

Embodiments of this application provide a method for reusing a shared library, to enable different APPs to invoke a same shared library during running, so as to improve utilization of storage space of an electronic product.

According to a first aspect, an embodiment of this application provides a method for reusing a shared library. The method is applied to an electronic device, a plurality of APPs are installed in the electronic device, and each of the plurality of APPs includes at least one shared library. For example, the at least one shared library may include a second shared library.

According to the method for reusing a shared library, the electronic device determines whether the second shared library having the same file data as a first shared library of a first APP exists in the electronic device. The first shared library is any shared library in the first APP. The determining whether a second shared library having the same file data as a first shared library of a first APP exists in the electronic device comprises: generating a first identification of the first shared library based on the file data of the first shared library by using a preset algorithm, and determining whether the first identification is the same as a second identification, wherein the second identification is generated by the electronic device based on file data of any shared library in the electronic device by using the preset algorithm; and if the first identification is the same as the second identification, determining that the second shared library having the same file data as the first shared library exists in the electronic device. If the second shared library exists in the electronic device, a correspondence between a first index node (inode) and a file name of the first shared library is stored in a directory table, and the file data of the first shared library is deleted from the electronic device. The first inode is an inode allocated by the electronic device to the second shared library, the directory table stores a correspondence between a file name of the second shared library and the first inode, and the first inode indicates a first storage area used to store file data of the second shared library. In other words, the electronic device may determine, based on the first inode, the first storage area that is in the electronic device and that stores the file data of the second shared library. Then, when the electronic device runs the first APP to invoke the first shared library, the electronic device may search for the first inode corresponding to the file name of the first shared library by using the directory table, to read the file data of the second shared library stored in the storage area indicated by the first inode.

Based on the foregoing technical solution, if the second shared library having the same file data as the first shared library of the first APP exists in the electronic device, the electronic device not only stores the file data of the second shared library, but also stores the file data of the first shared library, storage space of the electronic device is wasted. Therefore, when the second shared library having the same file data as the first shared library of the first APP exists in the electronic device, the electronic device may delete the file data of the first shared library. In this way, utilization of the storage space of the electronic device can be improved.

Further, to ensure that the electronic device normally runs the first APP, the electronic device may further store the correspondence between the first inode and the file name of the first shared library. In this way, when the electronic device runs the first APP to invoke the first shared library, the electronic device does not need to invoke the file data of the first shared library, and only needs to search for the first inode by using the file name of the first shared library, to read the file data of the second shared library, so as to ensure normal running of the APP.

With reference to the first aspect, in a possible design manner, when running an APP to invoke a shared library, the electronic device may map the shared library to a memory, and then invoke the shared library from the memory. In this way, performance of the electronic device can be improved. In a conventional technology, when running a plurality of APPs (for example, the first APP and a second APP including the second shared library), the electronic device separately maps the first shared library and the second shared library to the memory. Because an amount of mapped data is large, not only I/O performance is affected, but also waste of memory space is caused. However, in this embodiment of this application, the electronic device maps only the second shared library to the memory, and both the first APP and the second APP may invoke the file data of the second shared library from the memory during running. In this way, not only an amount of data mapped to the memory is reduced, and I/O performance is improved, but also occupied space of the memory can be reduced, and utilization of the memory is improved.

With reference to the first aspect, in another possible design manner, the method that "the electronic device determines whether the second shared library having same file data as a first shared library of a first APP exists in the electronic device" includes: When the electronic device completes installation of the first APP, the electronic device determines whether the second shared library having the same file data as the first shared library of the first APP exists in the electronic device; or when the electronic device completes running of the first APP, the electronic device determines whether the second shared library having the same file data as the first shared library of the first APP exists in the electronic device.

Based on the foregoing technical solution, when an APP (for example, the first APP) in the electronic device is downloaded to the electronic device from a platform, the electronic device may monitor an installation process of the first APP; and when completing installation of the first APP, the electronic device detects whether the electronic device stores the second shared library having the same file data as the first shared library, so that the electronic device can discover in a timely manner whether a same shared library is stored. In addition, the electronic device performs detection when completing the installation of the first APP, to avoid affecting running of the first APP.

However, when an APP (for example, the first APP) in the electronic device is copied to the electronic device from another removable storage device, the electronic device cannot monitor a copying process of the first APP. Therefore, only when the copied first APP runs, the electronic device can monitor the first APP, and detect whether the electronic device stores the second shared library having the same file data as the first shared library, so that the electronic device discovers in a timely manner whether a same shared library is stored. In addition, the electronic device performs detection when completing running of the first APP, to avoid affecting running of the APP.

With reference to the first aspect, in another possible design manner, that "when the electronic device completes running of the first APP, the electronic device determines whether the second shared library having same file data as the first shared library of the first APP exists in the electronic device" may include: When the electronic device completes the running of the first APP for the first time, the electronic device determines whether the second shared library having the same file data as the first shared library of the first APP exists in the electronic device.

It may be understood that, according to the foregoing solution, if the electronic device determines that the second shared library having the same file data as the first shared library of the first APP exists in the electronic device, the electronic device may delete the file data of the first shared library. In this case, after the electronic device completes the running of the first APP for the first time, the electronic device may delete the file data of the first shared library. Therefore, after running the first APP again, the electronic device does not need to determine whether the second shared library having the same file data as the first shared library of the first APP exists in the electronic device. In this way, computing pressure of the electronic device can be reduced.

With reference to the first aspect, in another possible design manner, the method further includes: If the second shared library does not exist in the electronic device, the electronic device allocates a second inode to the first shared library, and stores a correspondence between the second inode and the file name of the first shared library in the directory table. The second inode indicates a second storage area used to store the file data of the first shared library. Then, when running the first APP to invoke the first shared library, the electronic device searches for the second inode corresponding to the file name of the first shared library by using the directory table, and reads the file data of the first shared library stored in the second storage area indicated by the second inode.

Based on this case, if the second shared library having the same file data as the first shared library of the first APP does not exist in the electronic device, it indicates that there is no shared library that can replace the first shared library in the electronic device. Therefore, the electronic device may store the first shared library. In this way, when the electronic device runs the first APP to invoke the first shared library, the electronic device may search for the second inode by using the file name of the first shared library, to read the file data of the first shared library, so as to ensure normal running of the APP.

With reference to the first aspect, in another possible design manner, the method further includes: If the second shared library exists in the electronic device, the electronic device adds 1 to a quantity of links of the first inode, where the quantity of links of the first inode is a quantity of shared libraries corresponding to the first inode; or if the second shared library does not exist in the electronic device, the electronic device adds 1 to a quantity of links of the second inode, where the quantity of links of the second inode is a quantity of shared libraries corresponding to the second inode, and an initial value of a quantity of links of each inode is 0.

To be specific, if the second shared library exists in the electronic device, it indicates that the first shared library can be replaced by the second shared library. In addition, because the first inode is allocated by the electronic device to the second shared library, the electronic device changes the quantity of links of the first inode to add 1 to the quantity of links of the first inode, so as to update the quantity of shared libraries corresponding to the first inode. Therefore, the electronic device can determine, based on the quantity of links of the first inode, a quantity of shared libraries replaced by the second shared library.

If the second shared library does not exist in the electronic device, it indicates that there is no shared library that can replace the first shared library in the electronic device. Therefore, the electronic device changes the quantity of links of the second inode to add 1 to the quantity of links of the second inode, so as to update the quantity of shared libraries corresponding to the second inode. Therefore, the electronic device can determine, based on the quantity of links of the second inode, a quantity of shared libraries replaced by the first shared library.

With reference to the first aspect, in another possible design manner, the method further includes: When deleting the second APP, the electronic device searches for a third inode corresponding to a file name of a third shared library by using the directory table; and if a quantity of links of the third inode is equal to 1, the electronic device deletes, from the electronic device, file data of the third shared library, the third inode, and a correspondence between the file name of the third shared library and the third inode; or if a quantity of links of the third inode is greater than 1, the electronic device subtracts 1 from the quantity of links of the third inode.

It may be understood that, if the quantity of links of the third inode is equal to 1, it indicates that the third shared library does not need to replace another shared library, that is, an APP other than the second APP does not invoke the third shared library during running. In addition, after the electronic device deletes the second APP, no APP in the electronic device invokes the third shared library. Therefore, when the electronic device deletes the second APP, the electronic device may delete the file data of the third shared library, the third inode, and the correspondence between the file name of the third shared library and the third inode, to save storage space of the electronic device.

If the quantity of links of the third inode is greater than 1, it indicates that the third shared library needs to replace another shared library, that is, an APP other than the second APP may need to invoke the third shared library during running. Therefore, to ensure normal running of another APP, the electronic device cannot delete the third shared library. In addition, because the electronic device deletes the second APP, that is, a quantity of APPs that invoke the third shared library is reduced, the electronic device changes the quantity of links of the third inode, to update a quantity of shared libraries corresponding to the third inode. Therefore, the electronic device can determine, based on the quantity of links of the third inode, a quantity of shared libraries replaced by the third shared library.

With reference to the first aspect, the method that "the electronic device determines whether the second shared library having same file data as a first shared library of a first APP exists in the electronic device" includes: The electronic device generates a first identification of the first shared library based on the file data of the first shared library by using a preset algorithm, and determines whether the first identification is the same as a second identification, where the second identification is generated by the electronic device based on file data of any shared library in the electronic device by using the preset algorithm.

Specifically, if the first identification is the same as the second identification, it is determined that the second shared library having the same file data as the first shared library exists in the electronic device. Further, in another possible design manner, if the first identification is different from the second identification, it is determined that the second shared library having the same file data as the first shared library does not exist in the electronic device.

With reference to the first aspect, in another possible design manner, the method further includes: When the first identification is different from the second identification, the electronic device stores a correspondence between the first identification and the second inode.

It may be understood that, when the first identification is different from the second identification, it indicates that the second shared library having the same file data as the first shared library does not exist in the electronic device. Therefore, the electronic device needs to store the correspondence between the first identification and the second inode, so that after storing the first shared library, the electronic device can determine, based on the first identification, whether file data of another shared library stored in the electronic device is the same as the first shared library.

With reference to the first aspect, in another possible design manner, the method further includes: If the quantity of links of the third inode is equal to 1, a correspondence between the third inode and a third identification is deleted from the electronic device, where the third identification is generated by the electronic device based on the file data of the third shared library by using the preset algorithm.

It may be understood that, if the quantity of links of the third inode is equal to 1, it indicates that the third shared library does not need to replace another shared library, that is, an APP other than the second APP does not invoke the third shared library during running. In addition, after the electronic device deletes the second APP, no APP in the electronic device invokes the third shared library. Therefore, when the electronic device deletes the second APP, the electronic device deletes the correspondence between the third inode and the third identification, to save storage space of the electronic device.

With reference to the first aspect, in another possible design manner, not according to the invention, the method further includes: The electronic device compares the file data of the first shared library with file data of each shared library in the electronic device, and determines whether the second shared library having the same file data as the first shared library exists in the

According to a second aspect, an embodiment of this application provides an electronic device. A plurality of applications APPs are installed in the electronic device, and each of the plurality of APPs includes at least one shared library. The electronic device includes a memory and a processor, and the memory is coupled to the processor. The at least one shared library is stored in the memory, the memory is further configured to store computer program code, and the computer program code includes computer instructions. When the computer instructions are executed by the processor, the electronic device is enabled to perform the method according to any one of the first aspect or the possible design manners of the first aspect.

In an embodiment of the second aspect, the processor of the electronic device comprises a chip system.

According to a third aspect, an embodiment of this application provides a computer storage medium. The computer storage medium includes computer instructions, and when the computer instructions are run on an electronic device, the electronic device is enabled to perform the method according to any one of the first aspect and the possible design manners of the first aspect.

According to a fourth aspect, an embodiment of this application provides a computer program product. When the computer program product runs on a computer, the computer is enabled to perform the method according to any one of the first aspect and the possible design manners of the first aspect.

It may be understood that, for beneficial effects that can be achieved by the electronic device according to any one of the second aspect, the computer storage medium according to the third aspect, and the computer program product according to the fourth aspect, refer to the beneficial effects achieved in any one of the first aspect and the possible design manners of the first aspect. Details are not described herein again.

### BRIEF DESCRIPTION OF DRAWINGS

FIG. 1 is a schematic diagram of a hardware structure of an electronic device according to an embodiment of this application;
FIG. 2A is a system framework diagram of an electronic device according to an embodiment of this application;
FIG. 2B is a system framework diagram of another electronic device according to an embodiment of this application;
FIG. 2C is a flowchart of a method for reusing a shared library according to an embodiment of this application;
FIG. 2D is a system framework diagram of still another electronic device according to an embodiment of this application;
FIG. 3 is a flowchart of another method for reusing a shared library according to an embodiment of this application;
FIG. 4 is a flowchart of still another method for reusing a shared library according to an embodiment of this application;
FIG. 5A is a schematic diagram of a relationship among an APP, a shared library, an inode, and a storage area according to an embodiment of this application;
FIG. 5B is a schematic diagram of another relationship among an APP, a shared library, an inode, and a storage area according to an embodiment of this application;
FIG. 6 is a schematic composition diagram of an apparatus for reusing a shared library according to an embodiment of this application; and
FIG. 7 is a schematic composition diagram of a structure of a chip system according to an embodiment of this application.

### DESCRIPTION OF EMBODIMENTS

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more such features. In the descriptions of embodiments, unless otherwise specified, "a plurality of" means two or more than two.

Embodiments of this application provide a method for reusing a shared library. The method may be applied to an electronic device in which a plurality of APPs are installed, and each of the plurality of APPs (for example, a first APP and a second APP) includes at least one shared library.

The APP in embodiments of this application may be a downloadable application installed in the electronic device. The downloadable application is an application that may provide an internet protocol multimedia subsystem (Internet Protocol Multimedia Subsystem, IMS) connection of the downloadable application. The downloadable application may be an application pre-installed in the electronic device or a third-party application (for example, a first APP and a second APP) that may be downloaded by a user and installed in the electronic device.

For example, the first APP may be an application pre-installed in the electronic device, such as a "Calendar" or a "Notepad", and the second APP may be a third-party application, such as a payment application or a video application, that is downloaded by the user and installed in the electronic device.

In a possible design, after completing installation of the first APP, the electronic device may perform the method for reusing a shared library provided in embodiments of this application.

For example, the electronic device may be a mobile phone whose operating system is an Android^{®} (Android^{®}), and the first APP may be a shopping application. When the mobile phone completes installation of the shopping application, that is, the mobile phone completes a process of decompressing an Android^{®} application package (Android^{®} application package, APK), and stores an executable program of the shopping application in the mobile phone. When the executable program needs to invoke a first shared library and a third shared library, the method may be performed.

It may be understood that, when an installation package of the APP (for example, the first APP) in the electronic device is downloaded from a network platform to the electronic device, or the electronic device pre-stores an installation package of the first APP, the electronic device may monitor an installation process of the first APP, and perform the method when the electronic device completes installation of the first APP, so that the electronic device can detect in a timely manner whether a same shared library is stored.

In another possible design, after completing running of the first APP, the electronic device may perform the method for reusing a shared library provided in embodiments of this application.

For example, the electronic device may be a mobile phone whose operating system is an Android^{®}, and the first APP may be a shopping application. The mobile phone may perform the method when running the shopping application until a process of the shopping application is closed, that is, when the mobile phone stops running the shopping application for the first time.

It may be understood that, when the APP (for example, the first APP) in the electronic device is copied to the electronic device from another removable storage device, the electronic device cannot monitor a copying process of the first APP. Therefore, only when the copied first APP runs, the electronic device can monitor the first APP, and detect whether the electronic device stores a second shared library having the same file data as a first shared library, so that the electronic device discovers in a timely manner whether a same shared library is stored. In addition, the electronic device performs detection when completing the running of the first APP, to avoid affecting running of the APP.

Optionally, when completing running of the first APP for the first time, the electronic device may perform the method for reusing a shared library provided in embodiments of this application.

It may be understood that, if the electronic device determines that the second shared library having the same file data as the first shared library of the first APP exists in the electronic device, the electronic device may delete file data of the first shared library. In this case, after the electronic device completes the running of the first APP for the first time, the electronic device may delete the file data of the first shared library. Therefore, after running the first APP again, the electronic device does not need to determine whether the second shared library having the same file data as the first shared library of the first APP exists in the electronic device. In this way, computing pressure of the electronic device can be reduced.

By performing the method, the electronic device can delete a shared library (for example, the first shared library) having the same file data as a shared library (for example, the second shared library) stored in the electronic device, to improve utilization of storage space of the electronic device. In addition, the second shared library replaces the first shared library, so that different APPs can invoke a same shared library, to ensure normal running of the APP.

For example, the electronic device in embodiments of this application may be a device in which a plurality of APPs (each of the plurality of APPs includes at least one shared library) are installed, for example, a tablet computer, a mobile phone, a desktop, a laptop, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR)/virtual reality (virtual reality, VR) device, or a vehicle-mounted device. A specific form of the electronic device is not specifically limited in embodiments of this application.

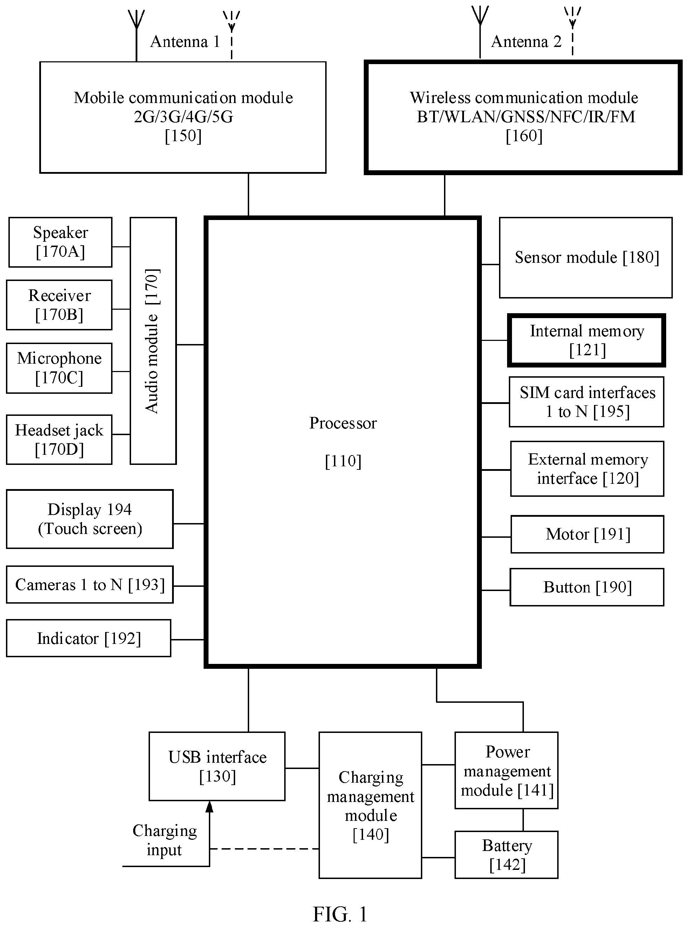

The method for reusing a shared library provided in this application may be performed by an apparatus for reusing a shared library (hereinafter referred to as a "reusing apparatus"), and the reusing apparatus may be an electronic device shown in FIG. 1. In addition, the reusing apparatus may alternatively be a central processing unit (Central Processing Unit, CPU) of the electronic device, or a control module configured to reuse a shared library in the electronic device. In embodiments of this application, the method for reusing a shared library provided in embodiments of this application is described by using an example in which the electronic device performs the method for reusing a shared library.

As shown in FIG. 1, in this application, an example in which the electronic device is a mobile phone 100 shown in FIG. 1 is used herein to describe the electronic device provided in this application. The mobile phone 100 shown in FIG. 1 is merely an example of the electronic device, and the mobile phone 100 may have more or fewer components than those shown in the figure, may combine two or more components, or may have different component configurations. Various components shown in FIG. 1 may be implemented in hardware including one or more signal processing and/or application-specific integrated circuits, software, or a combination of hardware and software.

As shown in FIG. 1, the mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The sensor module 180 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in this embodiment constitutes no specific limitation on the mobile phone 100. In some other embodiments, the mobile phone 100 may include more or fewer components than those shown in the figure, or some components may be combined, or some components may be split, or there may be a different component layout. The components shown in the figure may be implemented by hardware, software, or a combination of software and hardware.

The processor 110 is a control center of the mobile phone 100, and is connected to various parts of the mobile phone 100 through various interfaces and lines. The processor 110 performs various functions of the mobile phone 100 and processes data by running or executing an application program stored in the internal memory 121 and invoking data stored in the internal memory 121. In some embodiments, the processor 110 may include one or more processing units. In some embodiments of this application, the processor 110 may further include a program execution chip, configured to run an executable program and a shared library of an APP.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the mobile phone 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules illustrated in this embodiment is merely an example for description, and does not constitute a limitation on the structure of the mobile phone 100. In some other embodiments, the mobile phone 100 may alternatively use an interface connection manner different from that in the foregoing embodiment, or a combination of a plurality of interface connection manners.

The charging management module 140 is configured to receive a charging input from a charger. The charger may be a wireless charger or a wired charger. The charging management module 140 supplies power to an electronic device by using the power management module 141 while charging the battery 142.

The power management module 141 is configured to connect to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like. In some embodiments, the power management module 141 and the charging management module 140 may alternatively be disposed in a same device.

A wireless communication function of the mobile phone 100 may be implemented through the antenna 1, the antenna 2, the mobile communication module 150, the wireless communication module 160, the modem processor, the baseband processor, and the like. In some embodiments, in the mobile phone 100, the antenna 1 and the mobile communication module 150 are coupled, and the antenna 2 and the wireless communication module 160 are coupled, so that the mobile phone 100 can communicate with a network and another device by using a wireless communications technology. For example, in this embodiment of this application, the mobile phone 100 may send a first account and a login password to another device by using a wireless communications technology.

The antenna 1 and the antenna 2 are configured to transmit and receive an electromagnetic wave signal. Each antenna in the mobile phone 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that is applied to the mobile phone 100 and that includes wireless communications such as 2G, 3G, 4G, and 5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation.

The mobile communication module 150 may further amplify a signal modulated by the modem processor, and convert the signal into an electromagnetic wave for radiation through the antenna 1. In some embodiments, at least some function modules of the mobile communication module 150 may be disposed in the processor 110. In some embodiments, at least some function modules of the mobile communication module 150 may be disposed in a same device as at least some modules of the processor 110.

The wireless communication module 160 may provide a solution that is applied to the mobile phone 100 and that includes wireless communications such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. For example, in this embodiment of this application, the mobile phone 100 (for example, the first device 110) may access the Wi-Fi network by using the wireless communication module 160.

The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

The mobile phone 100 implements a display function by using the GPU, the display 194, the application processor, and the like. The GPU is a microprocessor for image processing, and is connected to the display 194 and the application processor. The GPU is configured to perform mathematical and geometrical calculation, and is configured to render an image. The processor 110 may include one or more GPUs that execute program instructions to generate or change display information.

The display 194 is configured to display an image, a video, and the like. The display 194 includes a display panel. For example, in this embodiment of this application, the display 194 may be configured to display an application interface of the first APP, such as a device sharing interface, a device search interface, or a two-dimensional code scanning interface.

The mobile phone 100 may implement a photographing function by using the ISP, the camera 193, the video codec, the GPU, the display 194, the application processor, and the like. The ISP is configured to process data fed back by the camera 193. The camera 193 is configured to capture a static image or a video. In some embodiments, the mobile phone 100 may include one or N cameras 193, where N is a positive integer greater than 1.

The external memory interface 120 may be configured to connect to an external storage card, for example, a Micro SD card, to extend a storage capability of the mobile phone 100. The external storage card communicates with the processor 110 through the external memory interface 120, to implement a data storage function. For example, files such as music and a video are stored in the external storage card.

The internal memory 121 is configured to store an application and data. The processor 110 performs various functions of the mobile phone 100 and data processing by running the application and the data that are stored in the internal memory 121. The internal memory 121 mainly includes a program storage area and a data storage area. The program storage area may store binary files such as an operating system, an executable program, and a shared library. The data storage area may store a correspondence between data.

In addition, the internal memory 121 may include a high-speed random access memory (Random Access Memory, RAM), and may further include a nonvolatile memory such as a magnetic disk storage device, a flash memory device, or another volatile solid-state storage device. The internal memory 121 may store various operating systems. The internal memory 121 may be independent, and is connected to the processor 110 through the communication bus; or the internal memory 121 may be integrated with the processor 110.

The mobile phone 100 may implement an audio function such as music playing or recording by using the audio module 170, the speaker 170A, the receiver 170B, the microphone 170C, the headset jack 170D, the application processor, and the like.

The button 190 includes a power button, a volume button, and the like. The button 190 may be a mechanical button, or may be a touch button. The motor 191 may generate a vibration prompt. The motor 191 may be configured to provide an incoming call vibration prompt and a touch vibration feedback. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or detached from the SIM card interface 195, to implement contact with or separation from the mobile phone 100. The mobile phone 100 may support one or N SIM card interfaces, where N is a positive integer greater than 1. The SIM card interface 195 may support a nano-SIM card, a micro-SIM card, a SIM card, and the like.

Although not shown in FIG. 1, the mobile phone 100 may further include a flash, a micro projection apparatus, a near field communication (Near Field Communication, NFC) apparatus, and the like. Details are not described herein.

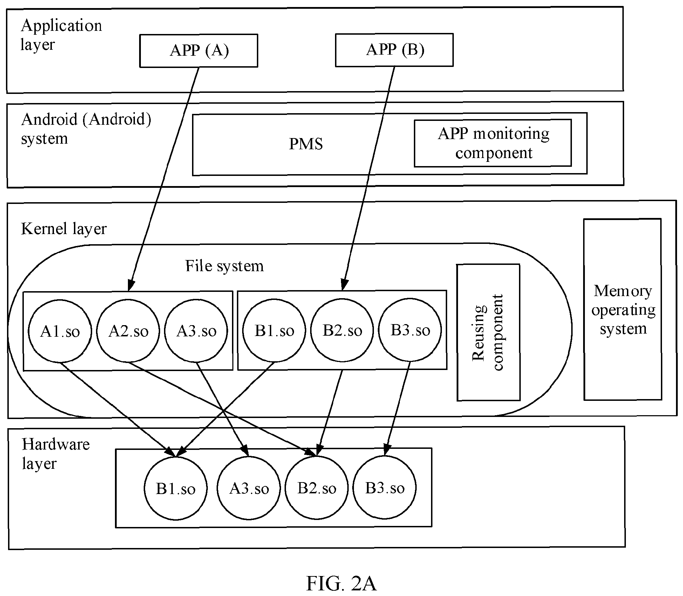

After the hardware structure of the electronic device is described, an example in which the electronic device is the mobile phone 100 is used herein in this application to describe a system architecture of the electronic device provided in this application. As shown in FIG. 2A, a system architecture of the mobile phone 100 may include an application layer, an operating system (Operating System, OS) (for example, an Android^{®} system), a kernel (kernel) layer, and a hardware layer.

The application layer may include a series of application packages, for example, an APP (A) and an APP (B). The Android^{®} system is taken as an example. Shared library files in the Android^{®} system are all so files (*.so). As shown in FIG. 2A, the APP (A) includes A1.so, A2.so, A3.so, and the like, and the APP (B) includes B1.so, B2.so, B3.so, and the like.

The Android^{®} system is a computer program that manages hardware and software resources of the mobile phone 100. The Android^{®} system needs to process basic transactions such as managing and configuring a memory, determining a priority of system resource supply and demand, controlling an input device and an output device, operating a network, and managing a file system. The Android^{®} system may also provide an operation interface that enables a user to interact with the system. In this embodiment of this application, the Android^{®} system includes an installation package manager service (Package Manager Service, PMS). The PMS is one of services of the Android^{®} system, and is mainly responsible for managing applications of the Android^{®} system and providing installation, uninstallation, optimization, and query services for various APK files. Specifically, the PMS includes an APP monitoring component. The APP monitoring component runs in the PMS, and may monitor installation, update, and deletion of the APP, and send a notification message to a reusing component. For example, after the APP (A) is installed in the mobile phone 100, the APP monitoring component sends a notification message to the reusing component, to notify the reusing component that the installation of the APP (A) is completed.

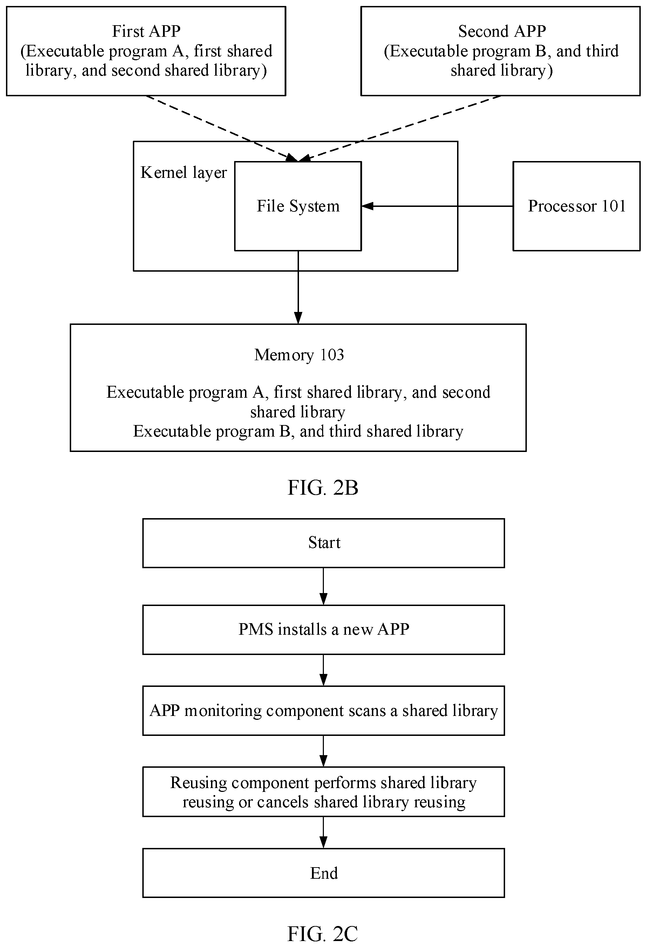

The kernel layer is a layer between hardware and software. The kernel layer includes at least a display driver, a camera driver, an audio driver, and a sensor driver. In this embodiment of this application, the kernel layer further includes a file system and a memory operating system. The file system is configured to manage data stored in the internal memory 121. Specifically, the file system may abstract the data stored in the internal memory 121 into a specific file, and provide operations such as adding, deleting, and modifying the file. For example, as shown in FIG. 2B, the file system may store an executable program A, a first shared library, and a second shared library in a first APP, and an executable program B and a third shared library in a second APP in the internal memory 121. Optionally, the processor 110 invokes the shared library by using the file system. The memory operating system (RAM OS) is used to manage the memory. Compared with the hardware layer, a memory access speed is faster. Therefore, when running the APP, the processor 110 needs to load a shared library of the APP to the memory operating system, to improve a running speed of the APP. The file system includes a reusing component, and the reusing component may implement reusing of a shared library in the file system. For example, file data of the A1.so and file data of the B1.so are the same, file data of the A2.so is the same as file data of the B2.so, and the reusing component may enable the APP (A) and the APP (B) to jointly invoke the B1.so and the B2.so.

The hardware layer includes a memory (for example, a flash memory). The flash memory can maintain data for a long time without a current supply, and a storage feature of the flash memory is equivalent to that of a hard disk. For example, the flash memory stores S1.so, S2.so, S3.so, and the like.

It should be noted that the system architecture of the electronic device shown in FIG. 2A may support the electronic device in performing the method for reusing a shared library provided in embodiments of this application when the electronic device completes installation of the first APP. FIG. 2C is a flowchart of the method for reusing a shared library according to an embodiment of this application.

Specifically, an example in which an installation completion time point of the APP (A) is later than an installation completion time point of the APP (B) is used to describe the method for reusing a shared library in embodiments of this application. The file data of the A1.so is the same as the file data of the B1.so, and the file data of the A2.so is the same as the file data of the B2.so. When installation of the APP (A) is completed, the APP monitoring component sends a notification message to the reusing component. The reusing component detects that the B1.so having the same as file data as the A1.so and the B2.so having the same as file data as the A2.so exist in the hardware layer (for example, the internal memory 121), and deletes the A1.so and the A2.so. When the mobile phone 100 runs the APP (A) or the APP (B) to invoke a shared library (for example, the B1.so), the memory operating system maps the B1.so to the memory, so that the processor 110 invokes the B1.so from the memory.

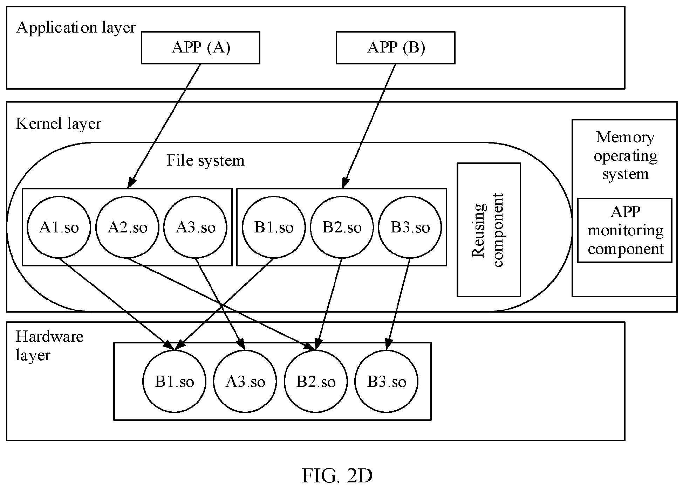

Optionally, in this application, an example in which the electronic device is the mobile phone 100 is used herein to describe another system architecture of the electronic device provided in this application. As shown in FIG. 2D, a system architecture of the mobile phone 100 includes an application layer, a kernel (kernel) layer, and a hardware layer.

For a description of the application layer, refer to the foregoing description of the application layer in FIG. 2A. Details are not described herein again.

For a description of the kernel layer, refer to the foregoing description of the kernel layer in FIG. 2A. A memory operating system of the kernel layer further includes a monitoring component. The monitoring component runs in the memory operating system, and may monitor invocation of a shared library by the mobile phone 100, and send a notification message to a reusing component. For example, when the mobile phone 100 stops running the APP (A), the reusing component detects that the mobile phone 100 stops invoking the B1.so, and sends a notification message to the reusing component, to notify the reusing component that a process of the APP (A) is closed.

For a description of the hardware layer, refer to the foregoing description of the hardware layer in FIG. 2A. Details are not described herein again.

It should be noted that the system architecture of the electronic device shown in FIG. 2D may support the electronic device in performing the method for reusing a shared library provided in embodiments of this application when the electronic device runs the first APP.

Specifically, an example in which a running completion time point of the APP (A) is later than a running completion time point of the APP (B) is used to describe the method for reusing a shared library in embodiments of this application. The file data of the A1.so is the same as the file data of the B1.so, and the file data of the A2.so is the same as the file data of the B2.so. When running of the APP (A) is completed, the APP monitoring component sends a notification message to the reusing component. The reusing component detects that the B1.so having the same as file data as the A1.so and the B2.so having the same as file data as the A2.so exist in the hardware layer (for example, the internal memory 121), and deletes the A1.so and the A2.so. When the mobile phone 100 runs the APP (A) or the APP (B) to invoke a shared library (for example, the B1.so), the memory operating system maps the B1.so to the memory, so that the processor 110 invokes the B1.so from the memory.

All methods in the following embodiments may be implemented in an electronic device that has the foregoing hardware structure and the foregoing system architecture. In the following embodiments, an example in which the electronic device is the mobile phone 100 is used to describe the method in embodiments of this application.

In embodiments of this application, a plurality of APPs (for example, a first APP, a second APP, and a third APP) are installed in the mobile phone 100, and each of the plurality of APPs includes at least one shared library. For example, the first APP may be a shopping application 1, and the shopping application 1 includes a shared library a and a shared library b. The second APP may be a shopping application 2, and the shopping application 2 includes a shared library c. The third APP may be a payment application, and the payment application includes a shared library d, a shared library e, and a shared library f.

Each APP in the mobile phone 100 includes one executable program and at least one shared library. File data of each shared library includes a plurality of library functions. In this way, when the APP runs, the executable program invokes a library function in the shared library, to complete a function of the APP. For example, the first APP is a shopping application, and the shopping application includes an executable program a, a shared library b, and a shared library c. When running the shopping application, the mobile phone 100 may first run the executable program a. When the executable program a needs to invoke a library function in the shared library b and a library function in the shared library c, the mobile phone 100 maps the shared library b and the shared library c to a memory, so that the executable program a can access the library function from the memory.

In embodiments of this application, there may be the following three relationships between any shared library in the first APP and any shared library in the second APP. The first APP and the second APP are any shared library in the mobile phone 100.

Relationship 1: The two shared libraries are different.

That the two shared libraries are different specifically means that the two shared libraries are different in file data. That the two shared libraries are different in file data specifically means that binary files of the two shared libraries are different. For example, two shared libraries include different library functions, and the mobile phone 100 separately compiles the file data of the two shared libraries, to obtain two different binary files.

It should be noted that library functions of two different shared libraries are different, and the following two cases may be included. Case (1): The library functions of two different shared libraries are completely different. Case (2): The library functions of two different shared libraries are partially the same, and the other functions are different.

For example, it is assumed that a shared library a in the first APP includes a library function 1, a library function 2, and a library function 3, and a shared library b in the second APP includes a library function 4 and a library function 5. The library function 1, the library function 2, the library function 3, the library function 4, and the library function 5 are different from each other. Therefore, the shared library a is completely different from the shared library b.

For another example, it is assumed that a shared library a in the first APP includes a library function 1, a library function 2, and a library function 3, and a shared library b in the second APP includes a library function 3, a library function 4, and a library function 5. The library function 1, the library function 2, the library function 3, the library function 4, and the library function 5 are different from each other. Therefore, the shared library a is partially different from the shared library b.

It should be noted that file names of two different shared libraries (namely, two shared libraries with different file data) may be the same or may be different.

Relationship 2: The two shared libraries are the same.

That the two shared libraries are the same specifically means that the two shared libraries are the same in file data. That the two shared libraries are the same in file data specifically means that binary files of the two shared libraries are the same. For example, two shared libraries include the same library functions, and the mobile phone 100 separately compiles the file data of the two shared libraries, to obtain two same binary files.

It should be noted that file names of two same shared libraries (namely, two shared libraries with same file data) may be the same or may be different.

In embodiments of this application, shared libraries in one APP are different from each other. For example, the first APP includes a shared library a, a shared library b, and a shared library c. The shared library a includes a first library function, the shared library b includes a second library function and a third library function, and the shared library c includes a fourth library function. A file name of the shared library a is "shared library a", and file data of the shared library a is a first library function. A file name of the shared library b is "shared library b", and file data of the shared library b is a second library function and a third library function. A file name of the shared library c is "shared library c", and file data of the shared library c is a fourth library function. In other words, the file names and file data of the shared library a, the shared library b, and the shared library c are different. Therefore, the shared library a, the shared library b, and the shared library c are different.

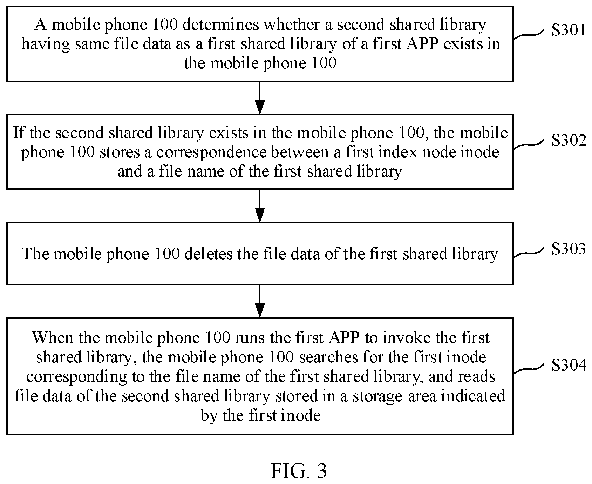

An embodiment of this application provides a method for reusing a shared library. As shown in FIG. 3, the method for reusing a shared library may include S301 to S304.

S301: A mobile phone 100 determines whether a second shared library having same file data as a first shared library of a first APP exists in the mobile phone 100.

The first APP includes at least one shared library, and the first shared library is any shared library in the first APP. For example, the first APP includes three shared libraries, and the three shared libraries are respectively a shared library a, a shared library b, and a shared library c. The first shared library may be the shared library a, the shared library b, or the shared library c. In this embodiment of this application, the mobile phone 100 may perform the method in this embodiment of this application on each shared library of the first APP.

In this embodiment of this application, the mobile phone 100 may determine, in the following two manners, whether the second shared library having the same file data as the first shared library of the first APP exists in the mobile phone 100, wherein manner 2 is not according to the invention.

Manner 1: The mobile phone 100 generates a first identification of the first shared library based on the file data of the first shared library by using a preset algorithm. The preset algorithm may be a secure hash algorithm 1 (Secure Hash Algorithm 1, SHA-1), an MD5 message-digest algorithm (MD5 Message-Digest Algorithm, MD5), a data encryption standard (Data Encryption Standard, DES) algorithm, or the like. This is not limited in this embodiment of this application.

For example, the mobile phone 100 may use SHA-1 based on the file data of the first shared library to generate a hash value, namely, 6cd7a of the file data of the first shared library. The mobile phone 100 determines whether the first identification is the same as a second identification. The second identification is generated by the mobile phone 100 based on file data of any shared library in the mobile phone 100 by using the preset algorithm.

In a possible implementation, a method for determining, by the mobile phone 100, whether the first identification is the same as a second identification may include: The mobile phone 100 searches a first data table for whether there is an identification that is the same as the first identification. The first data table is used to store a correspondence between an identification of a shared library and a number (Number) of an inode. In the first data table, all identifications are different. The inode corresponding to the identification of the shared library is allocated by the mobile phone 100 to the shared library. For a specific allocation process, refer to descriptions in S302. Details are not described herein again.

For example, Table 1 shows a correspondence between an inode allocated by the mobile phone 100 to a shared library and an identification (Identification) of the shared library. There is a correspondence between a first inode and an identification a of the shared library a, where a number of the first inode is 01, and the identification a is e908; there is a correspondence between a second inode and an identification b of the shared library b, where a number of the second inode is 02, and the identification b is 6cd7a; and the first data table may be referred to as a ShareMap table.

**Table 1**

| Number | Identification |
|---|---|
| 01 | e908 |
| 02 | 6cd7a |

It should be noted that the mobile phone 100 stores the correspondence between the number of the inode and the identification of the shared library in the first data table, and may store the correspondence between the inode and the identification of the shared library. In addition to that the mobile phone 100 stores the correspondence between the number of the inode and the identification of the shared library in the first data table, the mobile phone 100 may further store the correspondence between the number of the inode and the identification of the shared library in another data table. This is not limited in this embodiment of this application. In addition, the mobile phone 100 may further store the correspondence between the number of the inode and the identification of the shared library in a tree structure. This is not limited in this embodiment of this application. In this embodiment of this application, the method in this embodiment of this application is described by using an example in which the mobile phone 100 stores the correspondence between the number of the inode and the identification of the shared library in the first data table.

If the first identification is the same as the second identification, the mobile phone 100 determines that the second shared library having the same file data as the first shared library exists in the mobile phone 100. For example, the mobile phone 100 uses SHA-1 based on file data of the shared library c, and determines that an identification c of the shared library c is e908. With reference to Table 1, the mobile phone 100 traverses identifications in the first data table, and determines that the identification a is e908. Therefore, the identification c is the same as the identification a.

It may be understood that, because both the first identification and the second identification are generated by the mobile phone 100 based on the file data of the shared library by using the preset algorithm, when the first identification is the same as the second identification, the mobile phone 100 determines that the second shared library having the same file data as the first shared library exists in the mobile phone 100.

If the first identification is different from the second identification, the mobile phone 100 determines that the second shared library having the same file data as the first shared library does not exist in the mobile phone 100. It may be understood that, because both the first identification and the second identification are generated by the mobile phone 100 based on the file data of the shared library by using the preset algorithm, when the first identification is different from the second identification, the mobile phone 100 determines that the second shared library having the same file data as the first shared library does not exist in the mobile phone 100.

Optionally, if the first identification is different from the second identification, the mobile phone 100 stores a correspondence between the first identification and the second inode. For specific description of storing the correspondence between the first identification and the second inode by the mobile phone 100, refer to descriptions of S401. Details are not described herein again.

It may be understood that, when the first identification is different from the second identification, it indicates that the second shared library having the same file data as the first shared library does not exist in an electronic device. Therefore, the electronic device needs to store the correspondence between the first identification and the second inode, so that after storing the first shared library, the electronic device can determine, based on the first identification, whether file data of another shared library stored in the electronic device is the same as the first shared library.

Manner 2: The mobile phone 100 compares the file data of the first shared library with file data of each shared library in the mobile phone 100, to determine whether the second shared library having the same file data as the first shared library exists in the mobile phone 100.

In a possible implementation, the mobile phone 100 compares the file data of the first shared library with the file data of each shared library in the mobile phone 100 by using a preset comparison algorithm or a preset comparison tool, to determine whether the second shared library having the same file data as the first shared library exists in the mobile phone 100.

In a possible design, the mobile phone 100 may compare the file data of the first shared library with file data of one shared library in the mobile phone 100 at a time. For example, the mobile phone 100 includes a shared library a, a shared library b, a shared library c, and a shared library d. The mobile phone 100 compares the file data of the first shared library with file data of the shared library a by using the preset comparison tool, and determines that the file data of the first shared library is different from the file data of the shared library a. Then, the mobile phone 100 compares the file data of the first shared library with file data of the shared library b, and determines that the file data of the first shared library is different from the file data of the shared library b. Afterwards, the mobile phone 100 compares the file data of the first shared library with file data of the shared library c, and determines that the file data of the first shared library is the same as the file data of the shared library c. The mobile phone 100 stops comparing the file data of the first shared library with the file data of the shared library of the mobile phone 100, that is, the mobile phone 100 does not compare the file data of the first shared library with file data of the shared library d.

In another possible design, the mobile phone 100 may simultaneously compare the file data of the first shared library with file data of a plurality of shared libraries in the mobile phone 100. For example, the mobile phone 100 includes a shared library a, a shared library b, a shared library c, and a shared library d. The mobile phone 100 simultaneously compares the file data of the first shared library with file data of the shared library a, file data of the shared library b, and file data of the shared library c by using the preset comparison tool, and determines that the file data of the first shared library is the same as the file data of the shared library c. Then the mobile phone 100 stops comparing the file data of the first shared library with the file data of the shared library of the mobile phone 100, that is, the mobile phone 100 does not compare the file data of the first shared library with file data of the shared library d.

Optionally, if the second shared library exists in the mobile phone 100, the mobile phone 100 performs S302; or if the second shared library does not exist in the mobile phone 100, the mobile phone 100 performs S401.

S302: If the second shared library exists in the mobile phone 100, the mobile phone 100 stores a correspondence between the first index node inode and a file name of the first shared library.

The first inode is allocated by the mobile phone 100 to the second shared library. When the second shared library is stored in the mobile phone 100, the mobile phone 100 may store a correspondence between the first inode and a file name of the second shared library. Specifically, the mobile phone 100 stores the correspondence between the first inode and the file name of the second shared library by storing a correspondence between the number of the first inode and the file name of the second shared library.

According to the invention, the mobile phone 100 stores the correspondence between the number of the first inode and the file name of the second shared library in a second data table. For example, Table 2 shows a correspondence between a number of an inode allocated by the mobile phone 100 to a shared library and a file name (File name) of the shared library. A number of the first inode is 01, a file name of the second shared library is referred to as a shared library a, and the second data table is a directory table.

**Table 2**

| Number | File name |
|---|---|
| 01 | Shared library a |

It should be noted that, in addition to that the mobile phone 100 stores the correspondence between the number 25 of the inode and the file name of the shared library in the second data table, the mobile phone 100 may further store the correspondence between the number of the inode and the file name of the shared library in another data table. This is not limited in this embodiment of this application. In addition, the mobile phone 100 may further store the correspondence between the number of the inode and the file name of the shared library in a tree structure. This is not limited in this embodiment of this application. In this embodiment of this application, the method in this embodiment of this application is described by using an example in which the mobile phone 100 stores the correspondence between the number of the inode and the file name of the shared library in the second data table.

In a possible design, the first inode indicates a first storage area used to store file data of the second shared library.

It should be noted that, after the mobile phone 100 stores the second shared library, the mobile phone 100 may store meta information of the second shared library in the first inode. Meta information of each shared library includes: creation time (Creation time), file size (File size), storage location (Storage location), and the like. For example, the number of the first inode is 01, the file name of the second shared library is referred to as the shared library a, a creation date of the second shared library is "2020-08-10 09:00", a file size of the second shared library is "100 kilobytes (Kilobyte, kb)", and a storage location of the second shared library is "/data/app1/". In this case, the first inode may be "Number: 01, File name: shared library a, Creation time: 2020-08-10 09:00, File size: 100, Storage location: /data/app1/".

It may be understood that when the mobile phone 100 needs to invoke the second shared library, the mobile phone 100 may determine, by using a file name of a shared library, an inode corresponding to the file name. In this way, the mobile phone 100 may obtain a storage location of the shared library from the inode, and read file data of the shared library from the storage location.

In this embodiment of this application, when the mobile phone 100 determines that the second shared library having the same file data as the first shared library of the first APP exists in the mobile phone 100, the first APP has been stored in the mobile phone 100. In other words, the file data of the first shared library has been stored in the mobile phone 100. In addition, the mobile phone 100 allocates the second inode to the first shared library, the mobile phone 100 stores a correspondence between the file name of the first shared library and the second inode, and the second inode stores meta information of the first shared library. For example, with reference to Table 2, Table 3 shows a correspondence between a number of an inode allocated by the mobile phone 100 to a shared library and a filename (File name) of the shared library. A number of the second inode is 02, a file name of the first shared library is referred to as a shared library b, and the second data table is a directory table.

**Table 3**

| Number | File name |
|---|---|
| 01 (namely, the first inode) | Shared library a (namely, the second shared library) |
| 02 (namely, the second inode) | Shared library b (namely, the first shared library) |

In a possible implementation, if the second shared library exists in the mobile phone 100, the mobile phone 100 determines, from the first data table based on a second identification of the second shared library, a number of the first inode corresponding to the second identification, namely, a number of the first inode corresponding to the second shared library, stores a correspondence between the number of the first inode and the file name of the first shared library, and deletes a correspondence between the number of the second inode and the file name of the first shared library. For example, with reference to Table 3, Table 4 shows a correspondence between a number of an inode and a file name (File name) of a shared library. A number of the first inode is 01, a file name of the second shared library is referred to as a shared library a, a file name of the first shared library is referred to as a shared library b, and the second data table is a directory table.

**Table 4**

| Number | File name |
|---|---|
| 01 (namely, the first inode) | Shared library a (namely, the second shared library) |
| 01 (namely, the first inode) | Shared library b (namely, the first shared library) |

In another possible implementation, if the second shared library exists in the mobile phone 100, the mobile phone 100 determines, based on the file data of the second shared library, a number of the first inode corresponding to the second shared library, and modifies the correspondence between the file name of the first shared library and the number of the second inode to the correspondence between the file name of the first shared library and the number of the first inode.

It may be understood that the mobile phone 100 stores the correspondence between the first inode and the file name of the first shared library. Therefore, when running the first APP to invoke the first shared library, the mobile phone 100 can find the first inode based on the file name of the first shared library. In addition, because the first inode indicates the first storage area used to store the file data of the second shared library, the mobile phone 100 can read the file data of the second shared library based on the first inode, that is, in this case, a shared library actually invoked by the mobile phone 100 is the second shared library. In addition, because the file data of the second shared library is the same as the file data of the first shared library, normal running of the first APP can still be ensured when the mobile phone 100 invokes the second shared library.

S303: The mobile phone 100 deletes the file data of the first shared library.

In a possible implementation, if the second shared library exists in the mobile phone 100, the mobile phone 100 searches, based on the file name of the first shared library by using the second data table, for the second inode corresponding to the first shared library. The mobile phone 100 determines, based on the second inode, a second storage area used to store the file data of the first shared library. The mobile phone 100 deletes the file data of the first shared library based on the second storage area.

Optionally, the mobile phone 100 may further search a tree structure for the second inode corresponding to the first shared library. This is not limited in this embodiment of this application.

It may be understood that, when the mobile phone 100 deletes the file data of the first shared library, not only the normal running of the first APP is not affected, but also storage space of the electronic device can be saved, thereby avoiding storage of a plurality of same shared libraries in the electronic device, and improving utilization of storage space of the electronic device.

It should be noted that, in this embodiment of this application, the mobile phone 100 needs to delete the file data of the first shared library based on the correspondence between the file name of the first shared library and the second inode. Therefore, the mobile phone 100 needs to delete the file data of the first shared library before deleting or modifying the correspondence between the file name of the first shared library and the second inode. When the condition is met, a sequence in which the mobile phone 100 performs S302 and S303 is not limited in this embodiment of this application. In other words, the mobile phone 100 may first perform S302, and then perform S303; or the mobile phone 100 may first perform S303, and then perform S302; or the mobile phone 100 may perform S302 and S303 at the same time.

S304: When the mobile phone 100 runs the first APP to invoke the first shared library, the mobile phone 100 searches for the first inode corresponding to the file name of the first shared library, and reads the file data of the second shared library stored in the storage area indicated by the first inode.

In a possible implementation, when the mobile phone 100 runs the first APP to invoke the first shared library, the mobile phone 100 searches, based on the file name of the first shared library by using the second data table, for the first inode corresponding to the first shared library. The mobile phone 100 determines, based on the first inode, the first storage area used to store the file data of the second shared library. Then, the mobile phone 100 reads the file data of the second shared library in the first storage area based on the first storage area.

For example, the first inode is "Number: 01, File name: shared library a, Creation time: 2020-08-10 09:00, File size: 100, Storage location: /data/app1/". With reference to Table 4, when invoking the shared library b, the mobile phone 100 searches, by using the second data table, for a number, namely, 01 of an inode corresponding to the shared library b, and determines a first inode whose number is 01. Then the mobile phone 100 determines, based on the first inode, that the storage location is "/data/app1/", and reads the file data of the second shared library from "/data/app1/".

Optionally, the mobile phone 100 may further search, by using a tree structure, for the first inode corresponding to the first shared library. This is not limited in this embodiment of this application.

It may be understood that when the mobile phone 100 runs the first APP to invoke the first shared library, the mobile phone 100 actually invokes the second shared library. In this way, when the first APP and a second APP including the second shared library run, the electronic device maps only the second shared library to a memory, and both the first APP and the second APP may invoke the file data of the second shared library from the memory, to reduce occupied space of the memory and improve utilization of the memory.

Based on the foregoing technical solution, if the second shared library having the same file data as the first shared library of the first APP exists in the electronic device, the electronic device not only stores the file data of the second shared library, but also stores the file data of the first shared library, storage space of the electronic device is wasted. Therefore, when the second shared library having the same file data as the first shared library of the first APP exists in the electronic device, the electronic device may delete the file data of the first shared library. In this way, utilization of the storage space of the electronic device can be improved.

Further, to ensure that the electronic device normally runs the first APP, the electronic device may further store the correspondence between the first inode and the file name of the first shared library. In this way, when the electronic device runs the first APP to invoke the first shared library, the electronic device does not need to invoke the file data of the first shared library, and only needs to search for the first inode by using the file name of the first shared library, to read the file data of the second shared library, so as to ensure normal running of the APP.

In addition, when running an APP to invoke a shared library, the electronic device may map the shared library to the memory, and then invoke the shared library from the memory. In this way, performance of the electronic device can be improved. In a conventional technology, when running a plurality of APPs (for example, the first APP and the second APP including the second shared library), the electronic device separately maps the first shared library and the second shared library to the memory. Because an amount of mapped data is large, not only I/O performance is affected, but also waste of memory space is caused. However, in this embodiment of this application, the electronic device maps only the second shared library to the memory, and both the first APP and the second APP may invoke the file data of the second shared library from the memory during running. In this way, not only an amount of data mapped to the memory is reduced, and I/O performance is improved, but also the occupied space of the memory can be reduced, and the utilization of the memory is improved.

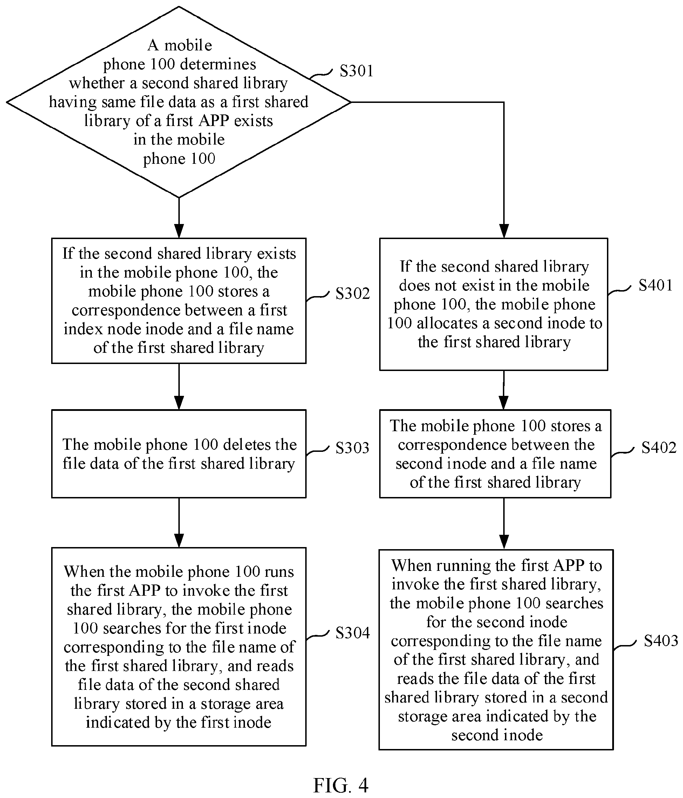

Optionally, an embodiment of this application provides a method for reusing a shared library. As shown in FIG. 4, after S301, the method for reusing a shared library may further include S401 to S403.

S401: If the second shared library does not exist in the mobile phone 100, the mobile phone 100 allocates a second inode to the first shared library.

The second inode indicates a second storage area used to store the file data of the first shared library.

It may be understood that, if the second shared library does not exist in the mobile phone 100, it indicates that there is no shared library that can replace the first shared library in the mobile phone 100. Therefore, after storing the first shared library, the mobile phone 100 allocates the second inode to the first shared library, so that when running the first APP to invoke the first shared library, the mobile phone 100 can read the file data of the first shared library based on the second inode, to ensure normal running of the first APP.

Optionally, if the second shared library does not exist in the mobile phone 100, after the mobile phone 100 allocates the second inode to the first shared library, the mobile phone 100 stores a correspondence between a first identification and the second inode. Specifically, the mobile phone 100 determines a number of the second inode allocated to the first shared library, and stores, in a first data table, the first identification and the number of the second inode.

S402: The mobile phone 100 stores a correspondence between the second inode and a file name of the first shared library.

For details, refer to the description of storing the correspondence between the second inode and the file name of the first shared library by the mobile phone 100 in S302. Details are not described herein again in this embodiment of this application.

It may be understood that the mobile phone 100 stores the correspondence between the second inode and the file name of the first shared library, so that when running the first APP to invoke the first shared library, the mobile phone 100 may search for the second inode corresponding to the file name of the first shared library based on the file name of the first shared library, and read the file data of the first shared library based on the second inode, to ensure the normal running of the first APP.

S403: When running the first APP to invoke the first shared library, the mobile phone 100 searches for the second inode corresponding to the file name of the first shared library, and reads the file data of the first shared library stored in the storage area indicated by the second inode.

In a possible implementation, when the mobile phone 100 runs the first APP to invoke the first shared library, the mobile phone 100 searches, based on the file name of the first shared library by using a second data table, for the second inode corresponding to the first shared library. The mobile phone 100 determines, based on the second inode, the second storage area used to store the file data of the first shared library. Then, the mobile phone reads the file data of the first shared library in the second storage area based on the second storage area.

Based on the technical solution shown in FIG. 4, when the second shared library having the same file data as the first shared library of the first APP does not exist in an electronic device, it indicates that there is no shared library that can replace the first shared library in the electronic device. Therefore, the electronic device needs to store the first shared library. In this way, when the electronic device runs the first APP to invoke the first shared library, the electronic device may search for the second inode by using the file name of the first shared library, to read the file data of the first shared library, so as to ensure normal running of the APP.

Optionally, in addition to storing meta information of a shared library corresponding to an inode, the inode further includes a quantity of links (Links). The quantity of links of the inode is a quantity of shared libraries corresponding to the inode. For example, with reference to Table 3, a shared library corresponding to the first inode includes the second shared library, a quantity of shared libraries corresponding to the first inode is 1, and a quantity of links of the first inode is 1. A shared library corresponding to the second inode includes the first shared library, a quantity of shared libraries corresponding to the second inode is 1, and a quantity of links of the second inode is 1. With reference to Table 4, shared libraries corresponding to the first inode include the first shared library and the second shared library, a quantity of shared libraries corresponding to the first inode is 2, and a quantity of links of the first inode is 2.

An initial value of a quantity of links of each inode is 0. In other words, when the mobile phone 100 has not allocated an inode to a shared library, a quantity of shared libraries corresponding to the inode is 0. Therefore, an initial value of a quantity of links of the inode is 0.

In a possible design, if the second shared library exists in the mobile phone 100, the mobile phone 100 adds 1 to the quantity of links of the first inode. The quantity of links of the first inode is a quantity of shared libraries corresponding to the first inode. For example, with reference to Table 3 and Table 4, before the correspondence between the file name of the first shared library and the first inode is established, the quantity of links of the first inode is 1; and after the correspondence between the file name of the first shared library and the first inode is established, the quantity of links of the first inode is 2.

In a possible implementation, if the second shared library exists in the mobile phone 100, the mobile phone 100 determines the first inode corresponding to a second identification of the second shared library. The mobile phone 100 stores the file name of the first shared library and the number of the first inode in the second data table based on the file name of the first shared library and the first inode, and adds 1 to the quantity of links of the first inode.

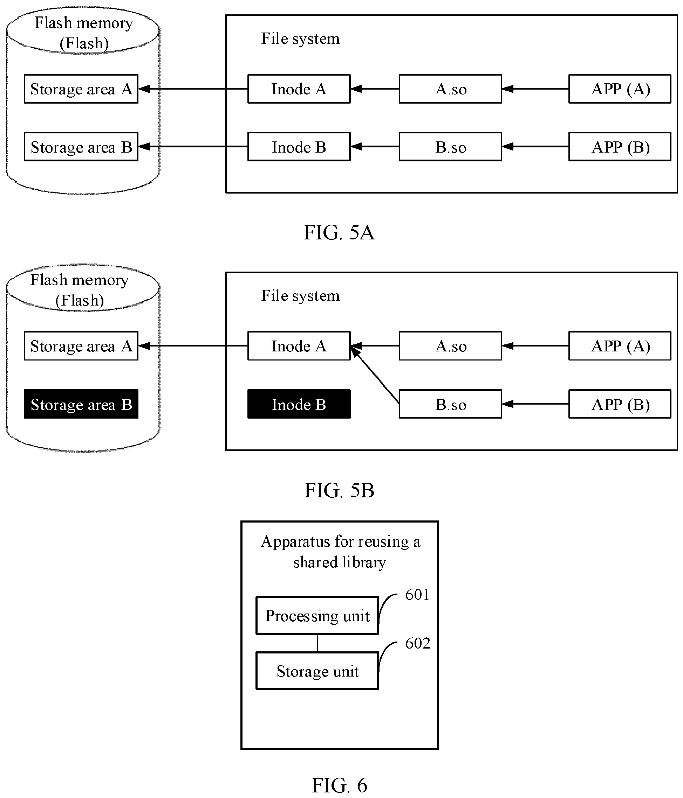

Specifically, FIG. 5A shows a correspondence between an APP (A), an A.so (a file name of a shared library), an inode A, and a storage area A, and a correspondence between an APP (B), a B.so (a file name of a shared library), an inode B, and a storage area B before the mobile phone 100 stores the correspondence between the first inode and the file name of the first shared library. With reference to FIG. 5A, FIG. 5B shows a correspondence between the APP (A), the A.so (the file name of the shared library), the inode A, and the storage area A, and a correspondence between the APP (B), the B.so (the file name of the shared library), the inode A, and the storage area A after the mobile phone 100 stores the correspondence between the first inode and the file name of the first shared library.

It may be understood that if the second shared library exists in the mobile phone 100, it indicates that the first shared library can be replaced by the second shared library. In addition, because the first inode is allocated by the mobile phone 100 to the second shared library, the mobile phone 100 changes the quantity of links of the first inode to add 1 to the quantity of links of the first inode, so as to update the quantity of shared libraries corresponding to the first inode. Therefore, the mobile phone 100 can determine, based on the quantity of links of the first inode, a quantity of shared libraries replaced by the second shared library.

In another possible design, if the second shared library does not exist in the mobile phone 100, the mobile phone 100 adds 1 to the quantity of links of the second inode. The quantity of links of the second inode is a quantity of shared libraries corresponding to the second inode. For example, with reference to Table 3, the mobile phone 100 creates the second inode. In this case, the second inode does not have a corresponding shared library, and the quantity of links of the second inode is 0. After the mobile phone 100 stores the correspondence between the number of the second inode and the file name of the first shared library in the second data table, the shared library corresponding to the second inode includes the first shared library, and the quantity of links of the second inode is 1.

It may be understood that, if the second shared library does not exist in the mobile phone 100, it indicates that there is no shared library that can replace the first shared library in the mobile phone 100. Therefore, the mobile phone 100 changes the quantity of links of the second inode to add 1 to the quantity of links of the second inode, so as to update the quantity of shared libraries corresponding to the second inode. Therefore, the mobile phone 100 can determine, based on the quantity of links of the second inode, a quantity of shared libraries replaced by the first shared library.

The foregoing embodiments describe merely related steps performed by the mobile phone 100 when an APP (for example, the first APP including the first shared library) is newly added to the mobile phone 100, that is, the first shared library is newly added to the mobile phone 100. An embodiment of this application provides a method for reusing a shared library. The following describes the method for reusing a shared library with reference to an application scenario in which the mobile phone 100 deletes an APP. The method in this embodiment of this application may further include S601 to S604. The mobile phone 100 may perform S601 to S604 before performing the foregoing method procedure, or in a process of performing the foregoing method procedure, or after performing the foregoing method procedure.

S601: When the mobile phone 100 deletes a second APP, the mobile phone 100 searches for a third inode corresponding to a file name of a third shared library.

The third shared library is any one of at least one shared library included in the second APP. For example, the second APP includes a shared library a, a shared library b, and a shared library c, and the third shared library may be the shared library a, the shared library b, or the shared library c. In this embodiment of this application, the mobile phone 100 may perform the method in this embodiment of this application on each shared library of the second APP. In a possible implementation, when the mobile phone 100 deletes the second APP, the mobile phone 100 determines the file name of the third shared library of the second APP, and searches, by using a second data table, for the third inode corresponding to the file name of the third shared library. For example, Table 5 shows a correspondence between a number of an inode allocated by the mobile phone 100 to a shared library and a file name of the shared library. A number of the third inode is 03, a file name of the third shared library is referred to as a shared library c, and the second data table is a directory table. When the mobile phone 100 determines that the file name of the shared library is the shared library c, the mobile phone 100 may find, by using Table 5, that the number of the third inode corresponding to the shared library c is 03.

**Table 5**

| Number | File name |
|---|---|
| 03 | Shared library c |

The mobile phone 100 determines, based on the number of the third inode, the third inode corresponding to the number of the third inode.

S602: The mobile phone 100 determines whether a quantity of links of the third inode is equal to 1.

If the quantity of links to the third inode is equal to 1, the mobile phone 100 performs S603; or if the quantity of links to the third inode is greater than 1, the mobile phone 100 performs S604.

It should be noted that, because the mobile phone 100 stores a correspondence between the third inode and a shared library in this case, the third inode corresponds to at least one shared library. Therefore, the quantity of links of the third inode is not less than 1, that is, the quantity of links of the third inode is not equal to 0.

S603: If the quantity of links of the third inode is equal to 1, the mobile phone 100 deletes file data of the third shared library, the third inode, and a correspondence between the file name of the third shared library and the third inode from the mobile phone 100.

In a possible implementation, if the quantity of links of the third inode is equal to 1, the mobile phone 100 determines a storage area of the file data of the third shared library based on a storage location of the third shared library in an inode, and deletes the file data of the third shared library. The mobile phone 100 deletes the correspondence between the file name of the third shared library and the third inode from the second data table based on the file name of the third shared library; or the mobile phone 100 deletes the correspondence between the file name of the third shared library and the third inode from the second data table based on the number of the third inode. The mobile phone 100 deletes the third inode based on the number of the third inode.

In another possible implementation, if the quantity of links of the third inode is equal to 1, the mobile phone 100 deletes a correspondence between the number of the third inode and a third identification from a first data table based on the number of the third inode.

Optionally, if the quantity of links of the third inode is equal to 1, the mobile phone 100 deletes a correspondence between the third inode and the third identification from the mobile phone 100.

It may be understood that, if the quantity of links of the third inode is equal to 1, it indicates that a shared library corresponding to the third inode includes only the third shared library. In other words, the third shared library does not need to replace another shared library, that is, an APP other than the second APP does not invoke the third shared library during running. In addition, after the mobile phone 100 deletes the second APP, no APP in the mobile phone 100 invokes the third shared library. Therefore, when the mobile phone 100 deletes the second APP, the mobile phone 100 deletes the file data of the third shared library, the third inode, the correspondence between the file name of the third shared library and the third inode, and the correspondence between the third inode and the third identification, to save storage space of the mobile phone 100.

S604: If the quantity of links to the third inode is greater than 1, the mobile phone 100 subtracts 1 from the quantity of links to the third inode.

For example, an APP(A) includes a shared library a, an APP (B) includes a shared library b, an APP (C) includes a shared library c, and file data of the shared library a, file data of the shared library b, and file data of the shared library c are the same. The shared library corresponding to the third inode includes the shared library a, the shared library b, and the shared library c. Therefore, the quantity of links of the third inode is 3. When the mobile phone 100 invokes the shared library a, the shared library b, or the shared library c, the mobile phone 100 invokes the file data of the shared library a. If the mobile phone 100 deletes the APP (C), the mobile phone 100 does not delete the file data of the shared library c, and only subtracts 1 from the quantity of links of the third inode. The shared library corresponding to the third inode includes the shared library a and the shared library b, and the quantity of links of the third inode is 2.

It may be understood that, if the quantity of links of the third inode is greater than 1, it indicates that the third shared library needs to replace another shared library, that is, an APP other than the second APP needs to invoke the third shared library during running. Therefore, to ensure normal running of another APP, the mobile phone 100 cannot delete the third shared library. In addition, because the mobile phone 100 deletes the second APP, that is, a quantity of APPs that invoke the third shared library is reduced, the mobile phone 100 changes the quantity of links of the third inode, to update a quantity of shared libraries corresponding to the third inode. Therefore, the mobile phone 100 can determine, based on the quantity of links of the third inode, a quantity of shared libraries replaced by the third shared library.

Based on the foregoing technical solution, an electronic device can determine, based on a quantity of links of an inode (for example, the third inode), whether an APP in the electronic device needs to invoke file data of the shared library (for example, the third shared library), to determine whether file data of a shared library corresponding to the third inode, the third inode, and the correspondence between the file name of the third shared library and the third inode can be deleted. This not only can reduce waste of storage space, but also can ensure that the APP in the electronic device does not fail to run properly due to missing of a shared library.

It should be noted that, when the APP is installed in the electronic device, the electronic device may not only store an executable program and at least one shared library of the APP, but also store information data in the APP, such as a text file, a picture, and audio. In this way, when the APP runs, the executable program may invoke the information data in the APP, and display the information data (for example, a picture) to a user. However, if different APPs in the electronic device include same information data, for example, a first APP includes a picture a, and a second APP also includes the picture a, the electronic device repeatedly stores the picture a. This causes only waste of storage space. In addition, when the first APP and the second APP run, a memory operating system maps the picture a to a memory. This not only affects I/O performance, but also causes waste of memory space. Therefore, the method for reusing a shared library provided in this embodiment of this application is not only applicable to management of the shared library in the electronic device, but also applicable to management of the information data in the APP in the electronic device. This is not limited in this embodiment of this application. For a specific method for reusing the information data, refer to the descriptions in the foregoing embodiments, and details are not described herein again.

An attribute of the information data in the electronic device is a read-only attribute. In this way, the information data can be prevented from being tampered with, to ensure that the information data in the APP does not change.

The foregoing mainly describes the solutions provided in embodiments of this application from a perspective of the electronic device. It may be understood that, to implement the foregoing functions, the electronic device includes corresponding hardware structures and/or software modules for performing the functions. A person skilled in the art should easily be aware that, in combination with the examples described in embodiments disclosed in this application, steps of the method for reusing a shared library can be implemented by hardware or a combination of hardware and computer software in this application. Whether a function is implemented by hardware or hardware driven by software of the electronic device depends on particular applications and design constraints of the technical solutions. A person skilled in the art may use different methods to implement the described functions for each particular application, but it should not be considered that the implementation goes beyond the scope of this application.

In embodiments of this application, an apparatus for reusing a shared library may be divided into function modules or function units based on the foregoing method examples. For example, each function module or function unit may be obtained through division based on each corresponding function, or two or more functions may be integrated into one processing module. The foregoing integrated module may be implemented in a form of hardware, or may be implemented in a form of a software function module or a software function unit. In embodiments of this application, module or unit division is an example, and is merely a logical function division. In actual implementation, another division manner may be used.

FIG. 6 is a schematic diagram of an apparatus for reusing a shared library according to an embodiment of this application. The apparatus for reusing a shared library may be a function module that is in the foregoing electronic device (for example, the mobile phone 100) and that is configured to implement the method in embodiments of this application. As shown in FIG. 6, the apparatus for reusing a shared library may include a processing unit 601 and a storage unit 602.

The storage unit 602 is configured to store at least one shared library. For example, when the mobile phone 100 includes a first APP, the first APP includes a shared library a, and the storage unit may be configured to store the shared library a.

The processing unit 601 is configured to determine whether a second shared library having same file data as a first shared library of a first APP exists in the storage unit 602, where the first shared library is any shared library in the first APP. For example, with reference to FIG. 3, the processing unit 601 may be configured to perform S301.

The storage unit 602 is further configured to: if the second shared library exists in the storage unit, store a correspondence between a first index node inode and a file name of the first shared library, where the first inode is allocated by the processing unit to the second shared library, and the first inode indicates a first storage area used to store file data of the second shared library. For example, with reference to FIG. 3, the processing unit 601 may be configured to perform S302.

The processing unit 601 is further configured to delete the file data of the first shared library from the storage unit.

The processing unit 601 is further configured to: when running the first APP to invoke the first shared library, search for the first inode corresponding to the file name of the first shared library, and read the file data of the second shared library stored in the storage area indicated by the first inode. For example, with reference to FIG. 3, the processing unit 601 may be further configured to perform S304.

Optionally, the processing unit 601 is specifically configured to: when completing installation of the first APP, determine whether the second shared library having the same file data as the first shared library of the first APP exists in the storage unit; or when completing running of the first APP, determine whether the second shared library having the same file data as the first shared library of the first APP exists in the storage unit. For example, the mobile phone 100 downloads an APK of the first APP by using a network and stores the APK in the storage unit 602. When decompressing of the APK of the first APP is completed, that is, installation of the first APP is completed, the processing unit 601 determines whether the second shared library having the same file data as the first shared library of the first APP exists in the storage unit.

Optionally, the processing unit 601 is further specifically configured to: when completing running of the first APP for the first time, determine whether the second shared library having the same file data as the first shared library of the first APP exists in the storage unit.

Optionally, the processing unit 601 is further configured to: if the second shared library does not exist in the storage unit 602, allocate a second inode to the first shared library, where the second inode indicates a second storage area used to store the file data of the first shared library. For example, with reference to FIG. 4, the processing unit 601 may be further configured to perform S401.

The storage unit 602 is further configured to store a correspondence between the second inode and the file name of the first shared library. For example, with reference to FIG. 4, the storage unit 602 may be further configured to perform S402.

The processing unit 601 is further configured to: when running the first APP to invoke the first shared library, search for the second inode corresponding to the file name of the first shared library, and read the file data of the first shared library stored in the second storage area indicated by the second inode. For example, with reference to FIG. 4, the processing unit 601 may be further configured to perform S403.

Optionally, the processing unit 601 is further configured to: if the second shared library exists in the storage unit, add 1 to a quantity of links of the first inode, where the quantity of links of the first inode is a quantity of shared libraries corresponding to the first inode; or if the second shared library does not exist in the storage unit, add 1 to a quantity of links of the second inode, where the quantity of links of the second inode is a quantity of shared libraries corresponding to the second inode, and an initial value of a quantity of links of each inode is 0.

Optionally, the processing unit 601 is further configured to: when deleting a second APP, search the storage unit 602 for a third inode corresponding to a file name of a third shared library. For example, the processing unit 601 may perform S601 in the foregoing method embodiment.

The processing unit 601 is further configured to determine whether a quantity of links of the third inode is equal to 1. For example, the processing unit 601 may perform S602 in the foregoing method embodiment.

The processing unit 601 is further configured to: if the quantity of links of the third inode is equal to 1, delete file data of the third shared library, the third inode, and a correspondence between the file name of the third shared library and the third inode from the storage unit 602. For example, the processing unit 601 may perform S603 in the foregoing method embodiment.

The processing unit 601 is further configured to: if the quantity of links of the third inode is greater than 1, subtract 1 from the quantity of links of the third inode. For example, the processing unit 601 may perform S604 in the foregoing method embodiment.

Optionally, the processing unit 601 is specifically configured to: generate a first identification of the first shared library based on the file data of the first shared library by using a preset algorithm, and determine whether the first identification is the same as a second identification, where the second identification is generated by the processing unit based on file data of any shared library in the storage unit by using the preset algorithm; and if the first identification is the same as the second identification, determine that the second shared library having the same file data as the first shared library exists in the storage unit; or if the first identification is different from the second identification, determine that the second shared library having the same file data as the first shared library does not exist in the storage unit.

Optionally, the storage unit 602 is further configured to: if the first identification is different from the second identification, store a correspondence between the first identification and the second inode.

Optionally, the processing unit 601 is further configured to: if the quantity of links of the third inode is equal to 1, delete a correspondence between the third inode and a third identification from the storage unit 602, where the third identification is generated by the processing unit based on the file data of the third shared library by using the preset algorithm.

Optionally, the processing unit 601 is further specifically configured to compare the file data of the first shared library with file data of each shared library in the storage unit, and determine whether the second shared library having the same file data as the first shared library exists in the storage unit 602.

Some other embodiments of this application provide an electronic device (for example, the mobile phone 100 shown in FIG. 1). A plurality of APPs are installed in the electronic device, and each of the plurality of APPs includes at least one shared library. For example, the at least one shared library may include a second shared library.

The electronic device may include a memory and one or more processors. The memory is coupled to the processor. The electronic device may further include a camera. Alternatively, the electronic device may be connected to an external camera. The memory is configured to store computer program code. The computer program code includes computer instructions. When the processor executes the computer instructions, the electronic device may perform the functions or steps performed by the mobile phone in the foregoing method embodiments. For a structure of the electronic device, refer to the structure of the mobile phone 100 shown in FIG. 1.

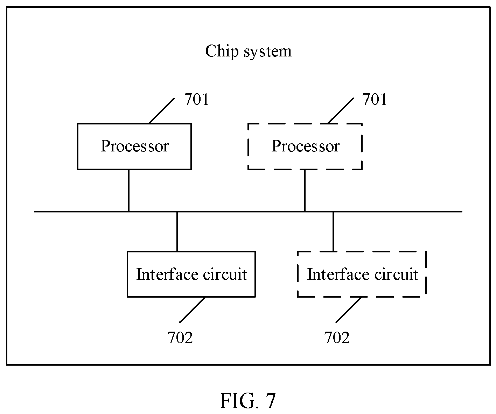

An embodiment of this application further provides a chip system. As shown in FIG. 7, the chip system includes at least one processor 701 and at least one interface circuit 702. The processor 701 and the interface circuit 702 may be interconnected through a line. For example, the interface circuit 702 may be configured to receive a signal from another apparatus (for example, a memory of an electronic device). For another example, the interface circuit 702 may be configured to send a signal to another apparatus (for example, the processor 701). For example, the interface circuit 702 may read instructions stored in the memory, and send the instructions to the processor 701. When the instructions are executed by the processor 701, the electronic device (for example, the mobile phone 100 shown in FIG. 1) may be enabled to perform the steps in the foregoing embodiments. Certainly, the chip system may further include another discrete device. This is not specifically limited in this embodiment of this application.

An embodiment of this application further provides a computer storage medium. The computer storage medium includes computer instructions. When the computer instructions are run on the foregoing electronic device (for example, the mobile phone 100 shown in FIG. 1), the electronic device is enabled to perform the functions or steps performed by the mobile phone in the foregoing method embodiments.

An embodiment of this application further provides a computer program product. When the computer program product runs on a computer, the computer is enabled to perform the functions or steps performed by the mobile phone in the foregoing method embodiments.

Based on the descriptions of the foregoing implementations, it may be clearly understood by a person skilled in the art that, for ease and brevity of description, division of the foregoing function modules is merely used as an example for illustration. In actual application, the foregoing functions may be allocated to different function modules and implemented based on a requirement, that is, an internal structure of an apparatus is divided into different function modules, to implement all or some of the functions described above.

In the several embodiments provided in this application, it should be understood that the disclosed apparatus and method may be implemented in other manners. For example, the described apparatus embodiment is merely an example. For example, division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The foregoing integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium, and includes a plurality of instructions for instructing a device (which may be a single-chip microcomputer, a chip, or the like) or a processor (processor) to perform all or some of the steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for reusing a shared library, applied to an electronic device (100), wherein a plurality of applications, APPs, are installed in the electronic device (100), each of the plurality of APPs comprises at least one shared library, and the reusing method comprises:
determining (S301) whether a second shared library having the same file data as a first shared library of a first APP exists in the electronic device (100), wherein the first shared library is any shared library in the first APP, wherein the determining whether a second shared library having the same file data as a first shared library of a first APP exists in the electronic device (100) comprises:
generating a first identification of the first shared library based on the file data of the first shared library by using a preset algorithm, and determining whether the first identification is the same as a second identification, wherein the second identification is generated by the electronic device (100) based on file data of any shared library in the electronic device (100) by using the preset algorithm; and
if the first identification is the same as the second identification, determining that the second shared library having the same file data as the first shared library exists in the electronic device (100);
if the second shared library exists in the electronic device (100), storing (S302) a correspondence between a first index node, inode, and a file name of the first shared library in a directory table, and deleting (S303) the file data of the first shared library from the electronic device (100), wherein the first inode is an inode allocated by the electronic device (100) to the second shared library, the directory table stores a correspondence between a file name of the second shared library and the first inode, and the first inode indicates a first storage area used to store file data of the second shared library; and
when the electronic device (100) runs the first APP to invoke the first shared library, searching (S304) for the first inode corresponding to the file name of the first shared library by using the directory table, and reading the file data of the second shared library stored in the storage area indicated by the first inode.

2. The method for reusing a shared library according to claim 1, wherein the determining whether a second shared library having the same file data as a first shared library of a first APP exists in the electronic device (100) comprises:
when the electronic device completes installation of the first APP, determining whether the second shared library having the same file data as the first shared library of the first APP exists in the electronic device (100); or
when the electronic device completes running of the first APP, determining whether the second shared library having the same file data as the first shared library of the first APP exists in the electronic device (100).

3. The method for reusing a shared library according to claim 1 or 2, wherein the method further comprises:
if the second shared library does not exist in the electronic device (100), allocating (S401) a second inode to the first shared library, wherein the second inode indicates a second storage area used to store the file data of the first shared library;
storing (S402) a correspondence between the second inode and the file name of the first shared library; and
when the electronic device (100) runs the first APP to invoke the first shared library, searching (S403) for the second inode corresponding to the file name of the first shared library, and reading the file data of the first shared library stored in the second storage area indicated by the second inode.

4. The method for reusing a shared library according to claim 3, wherein the method further comprises:
if the second shared library exists in the electronic device (100), adding 1 to a quantity of links of the first inode, wherein the quantity of links of the first inode is a quantity of shared libraries corresponding to the first inode; or
if the second shared library does not exist in the electronic device (100), adding 1 to a quantity of links of the second inode, wherein the quantity of links of the second inode is a quantity of shared libraries corresponding to the second inode, and
an initial value of a quantity of links of each inode is 0.

5. The method for reusing a shared library according to claim 3 or 4, wherein the method further comprises:
when the electronic device (100) deletes a second APP, searching for a third inode corresponding to a file name of a third shared library by using the directory table; and
if a quantity of links of the third inode is equal to 1, deleting file data of the third shared library, the third inode, and a correspondence between the file name of the third shared library and the third inode from the electronic device (100); or
if a quantity of links of the third inode is greater than 1, subtracting 1 from the quantity of links of the third inode.

6. The method for reusing a shared library according to any one of claims 3 to 5, wherein the determining whether a second shared library having the same file data as a first shared library of a first APP exists in the electronic device (100) further comprises:
if the first identification is different from the second identification, determining that the second shared library having the same file data as the first shared library does not exist in the electronic device (100).

7. The method for reusing a shared library according to claim 6, wherein the method further comprises:
if the first identification is different from the second identification, storing a correspondence between the first identification and the second inode.

8. The method for reusing a shared library according to claim 5, wherein the method further comprises:
if the quantity of links of the third inode is equal to 1, deleting a correspondence between the third inode and a third identification from the electronic device (100), wherein
the third identification is generated by the electronic device (100) based on the file data of the third shared library by using the preset algorithm.

9. An electronic device (100), wherein a plurality of applications APPs are installed in the electronic device (100), each of the plurality of APPs comprises at least one shared library, the electronic device (100) comprises a memory (121) and a processor (110, 701), the memory (121) is coupled to the processor (110, 701), the at least one shared library is stored in the memory (121), and the memory (121) is further configured to store computer program code comprising computer instructions which, when the computer instructions are executed by the processor (110, 701), cause the electronic device (100) to perform the method according to any one of claims 1 to 8.

10. The electronic device (100) according to claim 9, wherein the processor (110, 701) of the electronic device (100) is comprised in a chip system.

11. The electronic device (100) according to claim 10, wherein the chip system comprises one or more interface circuits (702) and the processor, the interface circuit (702) and the processor are interconnected through a line and the interface circuit (702) is configured to receive a signal from the memory (121) of the electronic device (100) and send the signal to the processor (110, 701).

12. A computer storage medium, comprising computer instructions which, when the computer instructions are run on an electronic device (100), cause the electronic device (100) to perform the method according to any one of claims 1 to 8.

13. A computer program product, wherein when the computer program product runs on a computer, the computer is enabled to perform the method according to any one of claims 1 to 8.

## Patentansprüche

1. Verfahren zum Wiederverwenden einer gemeinsamen Bibliothek, das auf eine elektronische Vorrichtung (100) angewendet wird, wobei eine Vielzahl von Anwendungen, APPs, auf der elektronischen Vorrichtung (100) installiert ist, jede der Vielzahl von APPs mindestens eine gemeinsame Bibliothek umfasst und das Wiederverwendungsverfahren Folgendes umfasst:
Bestimmen (S301), ob eine zweite gemeinsame Bibliothek, die dieselben Dateidaten wie eine erste gemeinsame Bibliothek einer ersten APP aufweist, in der elektronischen Vorrichtung (100) vorhanden ist, wobei die erste gemeinsame Bibliothek eine beliebige gemeinsame Bibliothek in der ersten APP ist, wobei das Bestimmen, ob eine zweite gemeinsame Bibliothek, die dieselben Dateidaten wie eine erste gemeinsame Bibliothek einer ersten APP aufweist, in der elektronischen Vorrichtung (100) vorhanden ist, Folgendes umfasst:
Erzeugen einer ersten Kennung der ersten gemeinsamen Bibliothek auf der Grundlage der Dateidaten der ersten gemeinsamen Bibliothek unter Verwendung eines voreingestellten Algorithmus und Bestimmen, ob die erste Kennung dieselbe ist wie eine zweite Kennung, wobei die zweite Kennung durch die elektronische Vorrichtung (100) auf der Grundlage von Dateidaten einer beliebigen gemeinsamen Bibliothek in der elektronischen Vorrichtung (100) unter Verwendung des voreingestellten Algorithmus erzeugt wird; und,
wenn die erste Kennung dieselbe ist wie die zweite Kennung, Bestimmen, dass die zweite gemeinsame Bibliothek, die dieselben Dateidaten wie die erste gemeinsame Bibliothek aufweist, in der elektronischen Vorrichtung (100) vorhanden ist;
wenn die zweite gemeinsame Bibliothek in der elektronischen Vorrichtung (100) vorhanden ist, Speichern (S302) einer Entsprechung zwischen einem ersten Indexknoten, einem Inode und einem Dateinamen der ersten gemeinsamen Bibliothek in einer Verzeichnistabelle und Löschen (S303) der Dateidaten der ersten gemeinsamen Bibliothek von der elektronischen Vorrichtung (100), wobei der erste Inode ein Inode ist, welcher der zweiten gemeinsamen Bibliothek durch die elektronische Vorrichtung (100) zugewiesen wird, die Verzeichnistabelle eine Entsprechung zwischen einem Dateinamen der zweiten gemeinsamen Bibliothek und dem ersten Inode speichert,
und der erste Inode einen ersten Speicherbereich angibt, der verwendet wird, um Dateidaten der zweiten gemeinsamen Bibliothek zu speichern; und,
wenn die elektronische Vorrichtung (100) die erste APP ausführt, um die erste gemeinsame Bibliothek aufzurufen, Suchen (S304) nach dem ersten Inode, der dem Dateinamen der ersten gemeinsamen Bibliothek entspricht, unter Verwendung der Verzeichnistabelle und Lesen der Dateidaten der zweiten gemeinsamen Bibliothek, die in dem Speicherbereich gespeichert sind, der durch den ersten Inode angegeben wird.

2. Verfahren zum Wiederverwenden einer gemeinsamen Bibliothek nach Anspruch 1, wobei das Bestimmen, ob eine zweite gemeinsame Bibliothek, die dieselben Dateidaten wie eine erste gemeinsame Bibliothek einer ersten APP aufweist, in der elektronischen Vorrichtung (100) vorhanden ist, Folgendes umfasst:
wenn die elektronische Vorrichtung Installation der ersten APP abgeschlossen hat, Bestimmen, ob die zweite gemeinsame Bibliothek, die dieselben Dateidaten wie die erste gemeinsame Bibliothek der ersten APP aufweist, in der elektronischen Vorrichtung (100) vorhanden ist; oder
wenn die elektronische Vorrichtung Ausführen der ersten APP abgeschlossen hat, Bestimmen, ob die zweite gemeinsame Bibliothek, die dieselben Dateidaten wie die erste gemeinsame Bibliothek der ersten APP aufweist, in der elektronischen Vorrichtung (100) vorhanden ist.

3. Verfahren zum Wiederverwenden einer gemeinsamen Bibliothek nach Anspruch 1 oder 2, wobei das Verfahren ferner Folgendes umfasst:
wenn die zweite gemeinsame Bibliothek nicht in der elektronischen Vorrichtung (100) vorhanden ist, Zuweisen (S401) eines zweiten Inodes zu der ersten gemeinsamen Bibliothek, wobei der zweite Inode einen zweiten Speicherbereich angibt, der verwendet wird, um die Dateidaten der ersten gemeinsamen Bibliothek zu speichern;
Speichern (S402) einer Entsprechung zwischen dem zweiten Inode und dem Dateinamen der ersten gemeinsamen Bibliothek; und
wenn die elektronische Vorrichtung (100) die erste APP ausführt, um die erste gemeinsame Bibliothek aufzurufen, Suchen (S403) nach dem zweiten Inode, der dem Dateinamen der ersten gemeinsamen Bibliothek entspricht, und Lesen der Dateidaten der ersten gemeinsamen Bibliothek, die in dem zweiten Speicherbereich gespeichert ist, der durch den zweiten Inode angegeben wird.

4. Verfahren zum Wiederverwenden einer gemeinsamen Bibliothek nach Anspruch 3, wobei das Verfahren ferner Folgendes umfasst:
wenn die zweite gemeinsame Bibliothek in der elektronischen Vorrichtung (100) vorhanden ist, Addieren von 1 zu einer Anzahl von Links des ersten Inodes, wobei die Anzahl von Links des ersten Inodes eine Anzahl von gemeinsamen Bibliotheken ist, die dem ersten Inode entspricht; oder
wenn die zweite gemeinsame Bibliothek nicht in der elektronischen Vorrichtung (100) vorhanden ist, Addieren von 1 zu einer Anzahl von Links des zweiten Inodes, wobei die Anzahl von Links des zweiten Inodes eine Anzahl von gemeinsamen Bibliotheken ist, die dem zweiten Inode entspricht, und
ein Anfangswert einer Anzahl von Links jedes Inodes 0 ist.

5. Verfahren zum Wiederverwenden einer gemeinsamen Bibliothek nach Anspruch 3 oder 4, wobei das Verfahren ferner Folgendes umfasst:
wenn die elektronische Vorrichtung (100) eine zweite APP löscht, Suchen nach einem dritten Inode, der einem Dateinamen einer dritten gemeinsamen Bibliothek entspricht, unter Verwendung der Verzeichnistabelle; und,
wenn eine Anzahl von Links des dritten Inodes gleich 1 ist, Löschen von Dateidaten der dritten gemeinsamen Bibliothek, des dritten Inodes und einer Entsprechung zwischen dem Dateinamen der dritten gemeinsamen Bibliothek und dem dritten Inode von der elektronischen Vorrichtung (100); oder,
wenn eine Anzahl von Links des dritten Inodes größer als 1 ist, Subtrahieren von 1 von der Anzahl von Links des dritten Inodes.

6. Verfahren zum Wiederverwenden einer gemeinsamen Bibliothek nach einem der Ansprüche 3 bis 5, wobei das Bestimmen, ob eine zweite gemeinsame Bibliothek, die dieselben Dateidaten wie eine erste gemeinsame Bibliothek einer ersten APP aufweist, in der elektronischen Vorrichtung (100) vorhanden ist, ferner Folgendes umfasst:
wenn sich die erste Kennung von der zweiten Kennung unterscheidet, Bestimmen, dass die zweite gemeinsame Bibliothek, die dieselben Dateidaten wie die erste gemeinsame Bibliothek aufweist, nicht in der elektronischen Vorrichtung (100) vorhanden ist.

7. Verfahren zum Wiederverwenden einer gemeinsamen Bibliothek nach Anspruch 6, wobei das Verfahren ferner Folgendes umfasst: wenn sich die erste Kennung von der zweiten Kennung unterscheidet, Speichern einer Entsprechung zwischen der ersten Kennung und dem zweiten Inode.

8. Verfahren zum Wiederverwenden einer gemeinsamen Bibliothek nach Anspruch 5, wobei das Verfahren ferner Folgendes umfasst: wenn die Anzahl von Links des dritten Inodes gleich 1 ist, Löschen einer Entsprechung zwischen dem dritten Inode und einer dritten Kennung von der elektronischen Vorrichtung (100), wobei die dritte Kennung durch die elektronische Vorrichtung (100) auf der Grundlage der Dateidaten der dritten gemeinsamen Bibliothek unter Verwendung des voreingestellten Algorithmus erzeugt wird.

9. Elektronische Vorrichtung (100), wobei eine Vielzahl von Anwendungen, APPs, in der elektronischen Vorrichtung (100) installiert ist, jede der Vielzahl von APPs mindestens eine gemeinsame Bibliothek umfasst, die elektronische Vorrichtung (100) einen Speicher (121) und einen Prozessor (110, 701) umfasst, der Speicher (121) mit dem Prozessor (110, 701) gekoppelt ist, die mindestens eine gemeinsame Bibliothek in dem Speicher (121) gespeichert ist und der Speicher (121) ferner dazu konfiguriert ist, einen Computerprogrammcode zu speichern, der Computeranweisungen umfasst, die, wenn die Computeranweisungen durch den Prozessor (110, 701) ausgeführt werden, die elektronische Vorrichtung (100) dazu veranlassen, das Verfahren nach einem der Ansprüche 1 bis 8 durchzuführen.

10. Elektronische Vorrichtung (100) nach Anspruch 9, wobei der Prozessor (110, 701) der elektronischen Vorrichtung (100) in einem Chipsystem umfasst ist.

11. Elektronische Vorrichtung (100) nach Anspruch 10, wobei das Chipsystem eine oder mehrere Schnittstellenschaltungen (702) und den Prozessor umfasst, die Schnittstellenschaltung (702) und der Prozessor über eine Leitung miteinander verbunden sind und die Schnittstellenschaltung (702) dazu konfiguriert ist, ein Signal von dem Speicher (121) der elektronischen Vorrichtung (100) zu empfangen und das Signal an den Prozessor (110, 701) zu senden.

12. Computerspeichermedium, umfassend Computeranweisungen, die, wenn die Computeranweisungen auf einer elektronischen Vorrichtung (100) ausgeführt werden, die elektronische Vorrichtung (100) in die Lage versetzen, das Verfahren nach einem der Ansprüche 1 bis 8 durchzuführen.

13. Computerprogrammprodukt, wobei, wenn das Computerprogrammprodukt auf einem Computer ausgeführt wird, der Computer in die Lage versetzt wird, das Verfahren nach einem der Ansprüche 1 bis 8 durchzuführen.

## Revendications

1. Procédé de réutilisation d'une bibliothèque partagée, appliqué à un dispositif électronique (100), dans lequel une pluralité d'applications, APP, sont installées dans le dispositif électronique (100), chacune de la pluralité d'APP comprend au moins une bibliothèque partagée, et le procédé de réutilisation comprend :
le fait de déterminer (S301) si une deuxième bibliothèque partagée ayant les mêmes données de fichier qu'une première bibliothèque partagée d'une première APP existe dans le dispositif électronique (100), dans lequel la première bibliothèque partagée est une bibliothèque partagée quelconque dans la première APP, dans lequel le fait de déterminer si une deuxième bibliothèque partagée ayant les mêmes données de fichier qu'une première bibliothèque partagée d'une première APP existe dans le dispositif électronique (100) comprend :
la génération d'une première identification de la première bibliothèque partagée sur la base des données de fichier de la première bibliothèque partagée à l'aide d'un algorithme prédéfini, et le fait de déterminer si la première identification est la même qu'une deuxième identification, dans lequel la deuxième identification est générée par le dispositif électronique (100) sur la base des données de fichier d'une bibliothèque partagée quelconque dans le dispositif électronique (100) à l'aide de l'algorithme prédéfini ; et
si la première identification est la même que la deuxième identification, la détermination que la deuxième bibliothèque partagée ayant les mêmes données de fichier que la première bibliothèque partagée existe dans le dispositif électronique (100) ;
si la deuxième bibliothèque partagée existe dans le dispositif électronique (100), le stockage (S302) d'une correspondance entre un premier nœud d'index, inode, et un nom de fichier de la première bibliothèque partagée dans une table de répertoire, et la suppression (S303) des données de fichier de la première bibliothèque partagée du dispositif électronique (100), dans lequel le premier inode est un inode alloué par le dispositif électronique (100) à la deuxième bibliothèque partagée, la table de répertoire stocke une correspondance entre un nom de fichier de la deuxième bibliothèque partagée et le premier inode,
et le premier inode indique une première zone de stockage utilisée pour stocker des données de fichier de la deuxième bibliothèque partagée ; et
lorsque le dispositif électronique (100) met en œuvre la première APP pour invoquer la première bibliothèque partagée, la recherche (S304) du premier inode correspondant au nom de fichier de la première bibliothèque partagée à l'aide de la table de répertoire, et la lecture des données de fichier de la deuxième bibliothèque partagée stockées dans la zone de stockage indiquée par le premier inode.

2. Procédé de réutilisation d'une bibliothèque partagée selon la revendication 1, dans lequel le fait de déterminer si une deuxième bibliothèque partagée ayant les mêmes données de fichier qu'une première bibliothèque partagée d'une première APP existe dans le dispositif électronique (100) comprend :
lorsque le dispositif électronique termine l'installation de la première APP, le fait de déterminer si la deuxième bibliothèque partagée ayant les mêmes données de fichier que la première bibliothèque partagée de la première APP existe dans le dispositif électronique (100) ; ou
lorsque le dispositif électronique termine la mise en œuvre de la première APP, le fait de déterminer si la deuxième bibliothèque partagée ayant les mêmes données de fichier que la première bibliothèque partagée de la première APP existe dans le dispositif électronique (100).

3. Procédé de réutilisation d'une bibliothèque partagée selon la revendication 1 ou 2, dans lequel le procédé comprend également :
si la deuxième bibliothèque partagée n'existe pas dans le dispositif électronique (100), l'allocation (S401) d'un deuxième inode à la première bibliothèque partagée, dans lequel le deuxième inode indique une seconde zone de stockage utilisée pour stocker les données de fichier de la première bibliothèque partagée ;
le stockage (S402) d'une correspondance entre le deuxième inode et le nom de fichier de la première bibliothèque partagée ; et
lorsque le dispositif électronique (100) met en œuvre la première APP pour invoquer la première bibliothèque partagée, la recherche (S403) du deuxième inode correspondant au nom de fichier de la première bibliothèque partagée, et la lecture des données de fichier de la première bibliothèque partagée stockées dans la seconde zone de stockage indiquée par le deuxième inode.

4. Procédé de réutilisation d'une bibliothèque partagée selon la revendication 3, dans lequel le procédé comprend également :
si la deuxième bibliothèque partagée existe dans le dispositif électronique (100), l'ajout de 1 à une quantité de liens du premier inode, dans lequel la quantité de liens du premier inode est une quantité de bibliothèques partagées correspondant au premier inode ; ou
si la deuxième bibliothèque partagée n'existe pas dans le dispositif électronique (100), l'ajout de 1 à une quantité de liens du deuxième inode, dans lequel la quantité de liens du deuxième inode est une quantité de bibliothèques partagées correspondant au deuxième inode, et
une valeur initiale d'une quantité de liens de chaque inode est 0.

5. Procédé de réutilisation d'une bibliothèque partagée selon la revendication 3 ou 4, dans lequel le procédé comprend également :
lorsque le dispositif électronique (100) supprime une seconde APP, la recherche d'un troisième inode correspondant à un nom de fichier d'une troisième bibliothèque partagée à l'aide de la table de répertoire ; et
si une quantité de liens du troisième inode est égale à 1, la suppression des données de fichier de la troisième bibliothèque partagée, du troisième inode et d'une correspondance entre le nom de fichier de la troisième bibliothèque partagée et le troisième inode du dispositif électronique (100) ; ou
si une quantité de liens du troisième inode est supérieure à 1, la soustraction de 1 de la quantité de liens du troisième inode.

6. Procédé de réutilisation d'une bibliothèque partagée selon l'une quelconque des revendications 3 à 5, dans lequel le fait de déterminer si une deuxième bibliothèque partagée ayant les mêmes données de fichier qu'une première bibliothèque partagée d'une première APP existe dans le dispositif électronique (100) comprend également :
si la première identification est différente de la deuxième identification, la détermination que la deuxième bibliothèque partagée ayant les mêmes données de fichier que la première bibliothèque partagée n'existe pas dans le dispositif électronique (100) .

7. Procédé de réutilisation d'une bibliothèque partagée selon la revendication 6, dans lequel le procédé comprend également : si la première identification est différente de la deuxième identification, le stockage d'une correspondance entre la première identification et le deuxième inode.

8. Procédé de réutilisation d'une bibliothèque partagée selon la revendication 5, dans lequel le procédé comprend également :
si la quantité de liens du troisième inode est égale à 1, la suppression d'une correspondance entre le troisième inode et une troisième identification du dispositif électronique (100), dans lequel
la troisième identification est générée par le dispositif électronique (100) sur la base des données de fichier de la troisième bibliothèque partagée à l'aide de l'algorithme prédéfini.

9. Dispositif électronique (100), dans lequel une pluralité d'applications, APP, sont installées dans le dispositif électronique (100), chacune de la pluralité d'APP comprend au moins une bibliothèque partagée, le dispositif électronique (100) comprend une mémoire (121) et un processeur (110, 701), la mémoire (121) est couplée au processeur (110, 701), l'au moins une bibliothèque partagée est stockée dans la mémoire (121), et la mémoire (121) est également configurée pour stocker un code de programme informatique comprenant des instructions informatiques qui, lorsque les instructions informatiques sont exécutées par le processeur (110, 701), amènent le dispositif électronique (100) à réaliser le procédé selon l'une quelconque des revendications 1 à 8.

10. Dispositif électronique (100) selon la revendication 9, dans lequel le processeur (110, 701) du dispositif électronique (100) est compris dans un système de puce.

11. Dispositif électronique (100) selon la revendication 10, dans lequel le système de puce comprend un ou plusieurs circuits d'interface (702) et le processeur, le circuit d'interface (702) et le processeur sont interconnectés via une ligne et le circuit d'interface (702) est configuré pour recevoir un signal de la mémoire (121) du dispositif électronique (100) et envoyer le signal au processeur (110, 701).

12. Support de stockage informatique, comprenant des instructions informatiques qui, lorsque les instructions informatiques sont mises en œuvre sur un dispositif électronique (100), amènent le dispositif électronique (100) à réaliser le procédé selon l'une quelconque des revendications 1 à 8.

13. Produit de programme informatique, dans lequel lorsque le produit de programme informatique est mis en œuvre sur un ordinateur, l'ordinateur est activé pour réaliser le procédé selon l'une quelconque des revendications 1 à 8.
